# FASCICULE DE BREVET EUROPEEN

(11) **EP 2 232 368 B1**
(45) Date de publication et mention de la délivrance du brevet: **17.07.2019**
(21) Numéro de dépôt: 08862902.7
(22) Date de dépôt: 11.12.2008
(51) Int. Cl.: G06F 9/50, G06F 15/80

(54) **SYSTEME COMPORTANT UNE PLURALITE D'UNITES DE TRAITEMENT PERMETTANT D'EXECUTER DES TACHES EN PARALLELE, EN MIXANT LE MODE D'EXECUTION DE TYPE CONTROLE ET LE MODE D'EXECUTION DE TYPE FLOT DE DONNEES**
SYSTEM MIT MEHREREN VERARBEITUNGSEINHEITEN, DIE ES UNMÖGLICH MACHEN, AUFGABEN GLEICHZEITIG AUSZUFÜHREN DURCH MISCHUNG DER AUSFÜHRUNGSART DES STEUERTYPS UND DER AUSFÜHRUNGSART DES DATENSTROMTYPS
SYSTEM COMPRISING A PLURALITY OF PROCESSING UNITS MAKING IT POSSIBLE TO EXECUTE TASKS IN PARALLEL, BY MIXING THE MODE OF EXECUTION OF CONTROL TYPE AND THE MODE OF EXECUTION OF DATA FLOW TYPE

(30) Priorité: 14.12.2007 FR 0708740
(43) Date de publication de la demande: 29.09.2010
(73) Titulaire: Commissariat à l'Énergie Atomique et aux Énergies Alternatives, 75015 Paris (FR)
(72) Inventeur: BLANC, Frédéric, F-91400 Orsay (FR); COLLETTE, Thierry, F-91120 Palaiseau (FR); DAVID, Raphaël, F-91440 Bures sur Yvette (FR); DAVID, Vincent, F-91460 Marcoussis (FR); HARRAND, Michel, F-38120 Saint Egreve (FR); LOUISE, Stéphane, F-91400 Orsay (FR); VENTROUX, Nicolas, F-91440 Bures sur Yvette (FR)
(74) Mandataire: Lucas, Laurent Jacques
(86) Numéro de dépôt international: PCT/EP2008/067345
(87) Numéro de publication internationale: WO 2009/077429

(56) Documents cités:
- EP-A- 1 043 658
- US-A1- 2005 251 567
- EWERSON CARVALHO ET AL: "Heuristics for Dynamic Task Mapping in NoC-based Heterogeneous MPSoCs" RAPID SYSTEM PROTOTYPING, 2007. RSP 2007. 18TH IEEE/IFIP INTERNATIONAL WORKSHOP ON, IEEE, PI, 1 mai 2007 (2007-05-01), pages 34-40, XP031175755 ISBN: 978-0-7695-2834-2
- N. VENTROUX: "Contrôle en ligne des systèmes multiprocesseurs hétérogènes embarqués : élaboration et validation d?une architecture" THESE, [Online] 19 septembre 2006 (2006-09-19), pages 1-192, XP002492658 Rennes, France Extrait de l'Internet: URL:ftp://ftp.irisa.fr/techreports/theses/ 2006/ventroux.pdf ventroux.pdf (application/pdf Object)> [extrait le 2008-08-12]
- LIGANG HE ET AL: "Performance Evaluation of Scheduling Applications with DAG Topologies on Multiclusters with Independent Local Schedulers" PARALLEL AND DISTRIBUTED PROCESSING SYMPOSIUM, 2006. IPDPS 2006. 20TH INTERNATIONAL RHODES ISLAND, GREECE 25-29 APRIL 2006, PISCATAWAY, NJ, USA,IEEE, 25 avril 2006 (2006-04-25), pages 1-8, XP010920585 ISBN: 978-1-4244-0054-6
- STANKOVIC J A ET AL: "THE SPRING KERNEL: A NEW PARADIGM FOR REAL-TIME OPERATING SYSTEMS*" OPERATING SYSTEMS REVIEW, ACM, NEW YORK, NY, US, vol. 23, no. 3, 1 juillet 1989 (1989-07-01), pages 54-71, XP000140317 ISSN: 0163-5980

## Description

La présente invention concerne un système comportant une pluralité d'unités de traitement permettant d'exécuter des tâches en parallèle de manière efficace et performante. Elle s'applique par exemple dans tous les domaines nécessitant des calculs intensifs avec des contraintes d'efficacité et de consommation liées aux systèmes embarqués.

L'industrie des semi-conducteurs se trouve devant un constat décevant : il n'y a plus de pistes crédibles pour augmenter de façon significative les performances des processeurs, en tout cas pas au niveau individuel. Seuls les systèmes utilisant plusieurs processeurs fonctionnant en parallèle semblent encore constituer une piste encourageante pour augmenter la puissance de calcul des systèmes. En effet, des études menées dans les années 1960 ont montré que le rapport entre la puissance de calcul et l'efficacité des systèmes de calculs est potentiellement beaucoup plus élevée pour les systèmes parallèles que pour les systèmes séquentiels. La question peut alors se poser de savoir pourquoi les systèmes parallèles ne se sont pas banalisés plus tôt, surtout dans le domaine des systèmes embarqués qui sont par principe très centrés sur l'optimisation et l'efficacité. D'une part, la technologie ne permettait pas l'intégration de structures massivement parallèles sur un même composant, à l'exception des structures SIMD (« Single Instruction, Multiple Data ») facilement programmables lorsque l'application est adaptée à ce type de parallélisme. D'autre part, de façon générale, les systèmes parallèles sont beaucoup plus difficiles à programmer et à mettre au point. C'est notamment le cas des systèmes symétriques, également appelés systèmes homogènes, basés sur la réplication du même élément de traitement et possédant des interfaces d'accès et de communication identiques et homogènes. C'est cependant moins le cas pour les systèmes asymétriques, également appelés systèmes hétérogènes, qui utilisent plusieurs processeurs spécialisés pour des traitements et des interfaces particulières. Les systèmes asymétriques se sont banalisés depuis longtemps, par exemple pour des périphériques classiques du type des puces réseaux ou vidéo, mais ils restent quand même limités quant au nombre de processeurs mis en parallèle. Il faut remarquer que, de manière générale, cette banalisation s'est faite dans des domaines applicatifs peu complexes au niveau du contrôle des traitements, c'est-à-dire dans lesquels l'hétérogénéité des ressources limite non seulement la complexité du placement des traitements mais également la flexibilité du placement des traitements. Toutefois, des systèmes multitraitements spécialisés sont également apparus dans des systèmes embarqués. Dans le domaine de la téléphonie mobile, des « multicores » sur une seule puce sont apparus qui peuvent contenir des DSP (« Digital Signal Processor ») pour le traitement du signal, des GPU (« General Purpose Processing Unit ») pour les traitements ordinaires, ainsi que des blocs analogiques d'entrée/sortie. Dans le domaine des baladeurs ou des lecteurs multimédias, des coeurs de décodage dédiés à l'audio (« MPEG Audio Layer », « Dolby D », « DTS ») ou à la vidéo (« MPEG », « H264 ») sont apparus en plus du processeur généraliste. Les systèmes parallèles symétriques se sont quant à eux moins développés, notamment à cause de la difficulté de prise en main de la programmation et à cause de l'inextricabilité de la mise au point des programmes. De manière générale, ces difficultés de programmation et de mise au point sont exacerbées par la complexité toujours croissante des applications. Dans les systèmes embarqués, ces difficultés sont également exacerbées par la volonté d'intégrer toujours plus de fonctionnalités et par l'accroissement permanent des volumes de données à traiter. Par exemple, les téléphones mobiles associent des fonctions de télécommunication avec des fonctions multimédias, de positionnement, ou encore des jeux. Les téléphones mobiles utilisent des capteurs vidéos de capacité toujours plus grande et des convertisseurs à débit toujours plus élevé. Par ailleurs des tâches de calculs intensifs côtoient des tâches dominées par le contrôle, avec des interactions très fortes entre ces différents éléments des applications.

L'invention concerne plus particulièrement le domaine des systèmes embarqués offrant une forte puissance de calcul. Les nouvelles applications dans les domaines tels que le multimédia, la communication, ou les systèmes de traitement temps réels exigent de plus en plus de puissance de calcul pour des puissances consommées et des surfaces maîtrisées. Comme déjà explicité précédemment, faute de pouvoir augmenter les puissances de traitement des éléments de calcul de façon isolée, la seule solution réaliste est de multiplier les éléments de calculs et de les faire fonctionner en parallèle. Dans ce cadre, un concept nouveau est en train de faire son apparition, celui de système parallèle sur puce. Les systèmes parallèles sur puce permettent en théorie d'utiliser de façon plus efficace les transistors supplémentaires intégrables sur une même puce du fait des progrès effectués dans les techniques de gravures. Même dans le cadre assez spécialisé des processeurs pour les systèmes embarqués, cette tendance à l'augmentation du nombre de coeurs d'exécution sur une même puce est très marquée. Cette tendance devrait marquer à moyen terme l'introduction voire la banalisation des systèmes avec plusieurs dizaines voire centaines d'éléments d'exécution. Parmi ces systèmes peuvent être cités les systèmes multiprocesseurs sur puce, usuellement désignés par l'acronyme anglo-saxon « MPSoC » signifiant « Multi-Processsor System on Chip ». Les MPSoC sont des systèmes complets qui intègrent au minimum des éléments de calcul pouvant fonctionner en parallèle et une architecture complète de communication sur puce. L'architecture de communication des MPSoC actuels reproduit une architecture système de connexion d'un système composé de plusieurs éléments macroscopiques. Elle peut comporter des bus de communication, des réseaux dédiés sur puce, usuellement désignés par l'acronyme anglo-saxon « NoC » signifiant « Network on Chip », des systèmes de commutation d'interconnexions dédiés, usuellement désignés par l'expression anglo-saxonne « crossbars », des interfaces d'entrée/sortie, de la mémoire vive, usuellement désignées par l'acronyme anglo-saxon « RAM », des mémoires locales, des mémoires caches ou « scratchpad ». Mais la plupart du temps, l'architecture de communication d'un MPSoC comporte une combinaison de tout cela. Le problème essentiel du mimétisme des architectures de communication sur puce vis-à-vis des architectures macroscopiques, c'est que les architectures macroscopiques sont prévues pour des traitements très réguliers, que ce soit des traitements de calculs massivement parallèles, des traitements de flux ou des tâches de serveur. Or, les applications sur les systèmes embarqués tendent de plus en plus vers des traitements beaucoup moins réguliers et beaucoup moins prédictibles. L'architecture de communication des MPSoC doit donc être repensée. En effet, la mise en oeuvre de systèmes parallèles sur puce efficaces et à haut niveau de performance comme les MPSoC nécessite de faire fonctionner de concert des dizaines voire des centaines de coeurs de calcul ou éléments de traitement. Si ce n'est pas le cas, alors l'utilisation du parallélisme n'est pas optimale. Ceci signifie que plusieurs dizaines voire plusieurs centaines d'éléments de traitement ne sont pas utilisés correctement, c'est-à-dire qu'ils ont un taux d'utilisation pas assez élevé. Par la suite, les éléments de traitement seront désignés par l'acronyme anglo-saxon « PE » signifiant « Processing Element ». Mais pour exploiter de manière optimale le parallélisme, les difficultés sont multiples. Au niveau logiciel, une difficulté est de fournir au programmeur des outils simples et accessibles pour exprimer dans du code l'ensemble du parallélisme potentiel d'une application. Une autre difficulté au niveau logiciel est de pouvoir en tirer le meilleur profit à la compilation de ce code. Mais ces problèmes logiciels très complexes ne sont pas l'objet de cette demande.

Pour exploiter efficacement une architecture parallèle, il faut aborder le problème sous le triple aspect de la maîtrise de l'indéterminisme, de la maîtrise des communications et de la maîtrise des contrôles. Car une fois qu'un parallélisme potentiel a été extrait d'une application et exprimé dans un programme, encore faut-il être capable de mettre en oeuvre effectivement ce parallélisme dans une architecture matérielle donnée. Dans un MPSoC par exemple, afin de tirer le meilleur profit du travail d'extraction du parallélisme applicatif fait par le programmeur, il faut réussir à répartir sur l'ensemble des ressources de la puce de nombreuses séquences de traitements, ces séquences étant liées entre elles par des dépendances de données ou de contrôle d'exécution. Par la suite ces séquences seront appellées tâches d'exécution. Une tâche d'exécution concerne donc l'exécution d'un traitement sur un PE. Elle est généralement appelée « thread » ou « fil d'exécution » par les spécialistes du logiciel. Par défaut dans le reste de la présente demande, le terme « tâche » seul fait référence à une tâche d'exécution. En l'absence d'une réflexion portant d'une part sur la façon de choisir les PE et d'autre part sur la façon de les faire fonctionner ensemble, il est fort peu probable que l'architecture puisse effectivement mettre en oeuvre tout le parallélisme exprimé dans le programme. En quelque sorte, de la même manière que le programme exprime le potentiel de parallélisme de l'application, il faut trouver un moyen d'exprimer le potentiel de parallélisme de l'architecture par un contrôle approprié des tâches. La réflexion doit prendre en compte toutes les situations qui peuvent nuire à une bonne utilisation du parallélisme potentiel de l'architecture. Il s'agit d'abord des risques d'être limité par l'accès à une ressource partagée essentielle comme la mémoire centrale, un réseau, un bus de communication ou un gestionnaire de tâches. Il s'agit également des risques de ne pas pouvoir gérer de façon suffisamment fine les interdépendances entre les tâches, ou de ne pas pouvoir les gérer sans adaptation au caractère particulièrement dynamique de certaines applications. Il s'agit enfin des risques de ne pas pouvoir maîtriser les indéterminismes de l'exécution parallèle, rendant complexe et délicate la mise au point des programmes. La réflexion doit aboutir à un modèle d'exécution, qui définit la façon de choisir les PE et la façon de les faire fonctionner ensemble. Faire fonctionner ensemble et de manière efficace plusieurs dizaines voire plusieurs centaines de PE au sein d'une seule et même puce est actuellement un des défis majeurs auquel l'industrie microélectronique ait à faire face. A l'heure actuelle, les techniques de programmation des applications parallèles sont nettement plus difficiles à mettre en oeuvre que les techniques de programmation des applications séquentielles, tant sur le plan de la conception que celui de la mise au point des programmes. Afin de faire progresser les modèles de programmation parallèles vers une meilleure accessibilité au programmeur, il faut que le modèle d'exécution de l'architecture parallèle sous-jacente soit bien adapté à cela. Ceci doit toutefois se faire sans pour autant sacrifier l'efficacité de mise en oeuvre sur les technologies silicium actuelles. Il s'agit là de l'un des défis techniques auxquels la présente invention se propose de répondre.

Pour des raisons historiques, l'exploitation du parallélisme s'est jusqu'à présent attachée à proposer des solutions permettant de bénéficier du parallélisme au niveau des tâches des applications. En effet, malgré d'intenses recherches autour de la définition d'architectures capables de gérer efficacement un fort degré de parallélisme au niveau des instructions, ces approches ont rapidement montré leurs limites. Dans le même temps, la complexité des systèmes embarqués rend extrêmement difficile ou peu efficace leur modélisation sous la forme d'un flot de contrôle unique. Ainsi, utilisateurs et concepteurs d'architecture s'accordent pour privilégier un parallélisme au niveau des tâches. En conséquence, une tendance forte observée actuellement dans le domaine des systèmes embarqués est l'intégration sur un même substrat silicium de plusieurs coeurs de processeurs permettant l'exécution de tâches en parallèle sur un même circuit. Plusieurs solutions ont déjà été proposées pour exploiter le parallélisme de telles architectures sur un même substrat silicium. Les modèles les plus connus sont le modèle « SMT » selon l'acronyme anglo-saxon signifiant « Simultaneous MultiThreading », le modèle « CMP » selon l'acronyme anglo-saxon signifiant « Chip MultiProcessing » et le modèle « CMT » selon l'acronyme anglo-saxon signifiant « Chip MultiThreading ». Par la suite, les unités de traitement capables de gérer l'exécution d'un ensemble d'instructions seront distinguées des unités de calcul capable uniquement d'exécuter une instruction.

Mais les modèles SMT, CMP et CMT ne répondent que partiellement à la problématique des systèmes embarqués. Ils présentent notamment de nombreux inconvénients. En effet, comme ce sera détaillé par la suite, ces modèles ne font aucune distinction entre les différentes classes de traitement pouvant cohabiter au sein d'une application. Construits sur des primitives de calcul non optimisées, ces systèmes sont souvent inadaptés aux besoins applicatifs en matière de consommation électrique, de rapport coût/performance et de sûreté de fonctionnement. Il s'agit là d'inconvénients majeurs.

Des solutions de type CMP conduisent à faire la distinction entre les traitements réguliers et les traitements irréguliers. Il s'agit de solutions mises en oeuvre sur des architectures qui intègrent des unités de calcul dédiées aux traitements intensifs, les traitements irréguliers étant pris en charge avec le logiciel système sur un processeur généraliste. Mais comme ce sera détaillé par la suite, l'utilisation de bus systèmes entraîne une réactivité plus faible de l'architecture et une incapacité du logiciel système à optimiser l'utilisation des unités de calcul.

Pour tenter de minimiser ces inconvénients, le brevet américain US2005/0149937A1, intitulé « Accelerator for multiprocessing system and method », propose de prendre en charge les mécanismes de synchronisation entre les unités de calcul par le biais d'une structure dédiée. Il n'apporte toutefois pas de solutions au problème de transfert de donnée entre les tâches.

Le brevet américain US2004/0088519A1, intitulé « Hyperprocessor », propose quant à lui une solution à la gestion d'un parallélisme de tâche dans le contexte des processeurs hautes performances. Il ne s'applique cependant pas aux systèmes embarqués, notamment pour des raisons de déterminisme et de coût.

D'autres solutions d'allocation des tâches ont été décrites dans :
- EP 1 043 658 A ;
- N.Ventroux «Contrôle en ligne des systèmes multi-processeurs hétérogènes embarqués: élaboration et validation d'une architecture, THESE, 19 septembre 2006, Rennes, France;

EWERSON CARVALHO ET AL :«Heuristics for Dynamic Task Mapping in NoC-based Heterogeneous MPSoCs, RAPIO SYSTEM PROTOTYPING, 2007. RSP 2007. 18TH IEEE/IFIP INTERNATIONAL WORKSHOP ON, IEEE, PI, 1 mai 2007 (2007-05-01).

Cependant, aucune de ces solutions existantes ne permet de gérer uniformément et individuellement plusieurs centaines d'unités de calcul, de manière efficace.

La présente invention a notamment pour but de pallier les inconvénients précités. Puisqu'il est difficile de gérer uniformément plusieurs centaines d'unités de calcul de manière individuelle, la présente invention propose plutôt une gestion des tâches hiérarchisée à deux niveaux. Les unités de calcul étant regroupées en blocs de plusieurs unités, la présente invention propose un mode de gestion des tâches entre les blocs et un mode de gestion des tâches à l'intérieur de chaque bloc. Par la suite, les blocs d'unités de calcul seront appelés des « groupements » ou « cluster » selon l'expression anglo-saxonne. Au sein d'un groupement donné, un modèle d'exécution très dynamique permet une optimisation locale de l'utilisation des unités de calcul, de sorte que le traitement d'un même ensemble de tâches dans le groupement peut varier d'une exécution à une autre. Entre groupements, un modèle d'exécution plus statique permet l'allocation de tâches à un groupement donné à la compilation et à l'édition de liens, de sorte qu'un même ensemble de tâches est toujours traité par le même groupement d'une exécution à une autre. Les tâches de communication qui assurent le routage des informations sont également gérées de manière statique à la compilation et à l'édition de liens. Dans le cas où l'application du modèle d'exécution à deux niveaux selon la présente invention amène à ce qu'une tâche affectée à un groupement donné doive utiliser formellement des données générées par un groupement distant, l'exécution de ladite tâche est faite sur le même modèle que si elle n'utilisait que des données du groupement local. Ceci est possible grâce à des tâches de communication de type « DMA » selon l'expression anglo-saxonne signifiant « Direct Memory Access », qui signalent la disponibilité ou la transmission des données depuis ou vers des destinations hors groupement et prennent en charge le transfert des données.

A cet effet, l'invention a pour objet un système comportant une pluralité d'unités de traitement permettant d'exécuter des tâches en parallèle et un réseau de communication. Les unités de traitement sont organisées en une pluralité de groupements d'unités, chaque groupement comportant une mémoire locale. Le système comporte des moyens pour allouer statiquement des tâches à chaque groupement d'unités, de sorte qu'une tâche donnée d'une application est traitée par le même groupement d'unités d'une exécution à une autre de ladite application. Chaque groupement d'unités comporte des moyens de gestion de groupement pour allouer dynamiquement des tâches à chacune de ses unités de traitement ainsi que de l'espace dans la mémoire locale pour les exécuter, de sorte qu'une tâche donnée d'une application peut ne pas être traitée par la même unité de traitement d'une exécution à une autre de ladite application. Les moyens de gestion de groupement comportent des moyens de gestion des tâches, des moyens de gestion des unités de traitement, des moyens de gestion de la mémoire locale et des moyens de gestion des communications impliquant ses unités de traitement, ces moyens de gestion opérant simultanément et coopérativement.

Avantageusement, la mémoire locale que comporte chaque groupement peut être dédiée audit groupement.

Dans un mode de réalisation, les groupements d'unités de traitement peuvent être disposés sur une puce, les groupements d'unités communiquant entre eux par l'intermédiaire d'un réseau sur puce. Le système peut également comporter une mémoire centrale.

Le système peut comporter des moyens de compilation et d'édition de liens pour allouer statiquement des tâches à chaque groupement d'unités.

Avantageusement, lorsqu'une tâche allouée à un groupement d'unités doit consommer des données produites dans un autre groupement d'unités, une tâche d'émission des données peut être exécutée dans le groupement où sont produites les données, ladite tâche d'émission pouvant transmettre les données à une tâche de réception des données exécutée dans le groupement où sont consommées les données, de sorte que la tâche consommant les données peut être exécutée sur le même mode d'allocation dynamique des ressources que si ladite tâche ne consommait que des données produites localement. Un espace mémoire dédié à la communication entre la tâche d'émission et la tâche de réception peut alors être réservé dans la mémoire locale de l'un des deux groupements impliqués. Avantageusement, la tâche d'émission peut être interrompue temporairement afin de ne pas saturer l'espace mémoire dédié à la communication entre la tâche d'émission et la tâche de réception. Le débit de la tâche d'émission peut également être déterminé à la compilation, de sorte à allouer à la tâche de réception suffisament d'espace dans la mémoire locale pour que cet espace ne puisse pas être saturé.

Par exemple, les tâches d'émission et de réception des données peuvent être allouées statiquement au groupement où sont produites les données et au groupement où sont consommées les données respectivement. Dans un mode de réalisation, les tâches d'émission et de réception peuvent être éxécutées par des moyens d'exécution dédiés échangeant directement des données avec la mémoire locale du groupement.

Par exemple, le groupement où sont consommées les données peut envoyer un crédit au groupement produisant les données en fonction de l'espace mémoire encore disponible, le groupement produisant les données pouvant ajuster le débit d'émission des données en fonction du crédit reçu. Lorsque l'espace mémoire dédié à la communication entre la tâche d'émission et la tâche de réception est utilisé au-delà d'un quota donné, les moyens de gestion de groupement du groupement gérant la tâche de reception peuvent également envoyer un signal d'interruption aux moyens de gestion de groupement du groupement gérant la tâche d'émission, puis peuvent envoyer un signal de reprise lorsque l'espace mémoire est utilisé en-dessous du quota.

Dans un mode de réalisation, les moyens de gestion de la mémoire locale peuvent allouer des espaces dans la mémoire locale avec un niveau de granularité fixe, de sorte à ne pas fragmenter l'espace d'adressage formé par la mémoire locale. Dans un autre mode de réalisation, les moyens de gestion de la mémoire locale peuvent allouer des espaces dans la mémoire locale avec un niveau de granularité variable.

Dans un mode de réalisation, les moyens de gestion de la mémoire locale peuvent libérer les espaces dans la mémoire locale par l'utilisation d'un compteur indiquant le nombre de tâches pouvant avoir à consommer les données de ces espaces. Dés qu'une tâche n'a plus besoin d'accéder à une donnée, la valeur du compteur est modifiée. Ainsi la valeur du compteur permet de pouvoir identifier s'il reste des tâches consommatrices. Si ce n'est pas le cas l'espace mémoire peut alors être libéré.

Dans un mode de réalisation, les moyens de gestion de la mémoire locale peuvent libérer les espaces dans la mémoire locale par l'utilisation d'une liste des tâches pouvant consommer les données de ces espaces. Les moyens de gestion de la mémoire locale attendent alors une information selon laquelle aucune des tâches de la liste n'a plus besoin de la donnée pour libérer l'espace mémoire associé.

Par exemple, les moyens de gestion des tâches peuvent comprendre un module de sélection des tâches pour déterminer les tâches allouables remplissant des prérequis d'exécution et un module d'ordonnancement pour affecter les tâches allouables aux unités de traitement. Avantageusement, le module de sélection des tâches peut déterminer les tâches allouables remplissant les prérequis d'exécution à la fois dans un mode d'exécution de type multitâche parallèle et dans un mode d'exécution de type flot de données. Les prérequis d'exécution peuvent comprendre des précédences de traitements et/ou des disponibilités de données et/ou des disponibilités d'espaces mémoires pour stocker les données produites et/ou des événements locaux ou exterieurs au groupement.

Avantageusement, la tâche d'émission peut permettre de transmettre des données vers plusieurs groupements d'unités simultanément, de façon à alimenter simultanément plusieurs tâches consommatrices avec les mêmes données. Plusieurs tâches d'émission peuvent également être exécutées simultanément dans un même groupement d'unités, de façon à alimenter simultanément plusieurs tâches consommatrices avec des données différentes.

Dans un mode de réalisation, le système peut comporter des moyens dédiés à la gestion de tâches d'émission et de réception de type DMA, afin de ne pas surcharger les moyens de gestion des tâches. Le système peut également comporter au moins une interface d'entrées/sorties.

Le système peut par exemple permettre d'exécuter une application de morphage en exécutant des tâches en parallèle sur ses unités de traitement. Il peut aussi permettre d'exécuter une application implémentant une transformée de Hough en exécutant des tâches en parallèle sur ses unités de traitement. Il peut aussi permettre d'exécuter une application de décodage MPEG en exécutant des tâches en mode pipeline.

Par exemple, les espaces dans la mémoire locale peuvent être libérés par utilisation d'un compteur du nombre de tâches ayant consommé les données de ces espaces ou par utilisation d'une liste des tâches ayant consommé les données de ces espaces.

L'invention a pour principaux avantages de permettre une exécution parrallèle et concurente de tâches sur une plateforme comportant une pluralité de PE, dans des modes d'exécution de type contrôle aussi bien que flot de données, ou qui mèle les deux modes. Ainsi, l'invention peut être utilisée dans le cadre de systèmes embarqués.

D'autres caractéristiques et avantages de l'invention apparaîtront à l'aide de la description qui suit faite en regard de dessins annexés qui représentent :
- la figure 1, par un diagramme, un modèle générique d'architecture SMT et un exemple de fonctionnement ;
- la figure 2, par un diagramme, un modèle générique d'architecture CMP et un exemple de fonctionnement ;
- la figure 3, par un diagramme, un modèle générique d'architecture CMT et un exemple de fonctionnement ;
- la figure 4, par un schéma, un exemple d'architecture comportant plusieurs groupements selon l'invention ;
- la figure 5, par un schéma, un exemple d'architecture d'un groupement selon l'invention et son principe de fonctionnement ;
- la figure 6, par un diagramme, les tâches pour mettre en oeuvre selon l'invention une application de « morphing » d'après l'expression anglo-saxonne ;
- la figure 7, par un schéma, une prédiction et une transformation de bloc dans une application de « morphing » selon l'invention ;
- la figure 8, par un chronogramme, les tâches exécutées sur un groupement lors d'une application de « morphing » selon l'invention ;
- la figure 9, par un chronogramme, les échanges intervenant pour la mise à jour de tables de traduction lors d'une application de « morphing » selon l'invention ;
- la figure 10, par un chronogramme, les échanges intervenant à la rupture du flot d'entrée pour une tâche lors d'une application de « morphing » selon l'invention ;
- la figure 11, par un chronogramme, une communication lors d'une application de « morphing » selon l'invention ;
- la figure 12, par un diagramme, un flot de données dans une application de décodage MPEG-2 selon l'invention ;
- la figure 13, par un diagramme, des tâches placées et routées lors d'une application de décodage MPEG-2 selon l'invention ;
- la figure 14, par un chronogramme, la gestion des communications lors d'une application de décodage MPEG-2 selon l'invention.

La mise en oeuvre d'une forte capacité de traitement est un besoin émergeant des applications au niveau des systèmes embarqués. De plus en plus de prises de décision haut niveau ont besoin de s'appuyer sur des tâches de traitement de l'information de bas et moyen niveau. Un exemple classique pourrait être la détection de panneaux routiers pour l'aide au pilotage de véhicules. Pour une telle application, des traitements bas niveaux doivent tout d'abord normaliser la luminosité et le contraste de l'image, puis faire de l'extraction de contours avec un filtrage de Sobel par exemple. Ensuite suivent des traitements de niveau moyen comme des transformées de Hough ou des reconnaissances de formes basiques. Enfin, des traitements de reconnaissance de forme complexes ou de corrélation, en relation avec des bases de données stockées en mémoire, sont appliqués aux niveaux les plus élevés. Ces traitements de haut niveau peuvent potentiellement être couplés avec des phases intermédiaires de bas niveau, comme par exemple une correction de parallaxe. Réciproquement, des traitements bas niveau, intenses en calculs, peuvent être dirigés par des données extérieures ou issues de traitements précédents. C'est notamment le cas des algorithmes de compression vidéo de dernières générations. Comme déjà indiqué précédemment, une tendance forte observée actuellement dans le domaine des systèmes embarqués est l'intégration sur un même substrat silicium de plusieurs PE permettant l'exécution de tous ces traitements en parallèle sur un même circuit, notamment grâce à des modèles SMT, CMP ou CMT.

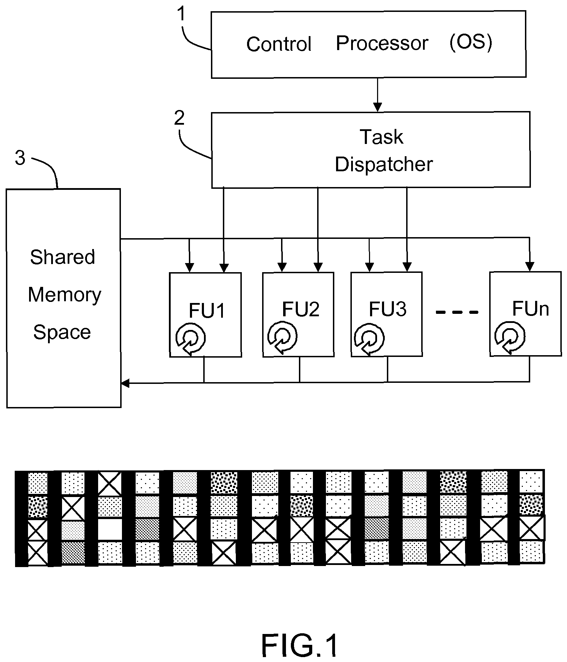

La figure 1 illustre par un diagramme un modèle SMT générique selon l'art antérieur, ainsi qu'un exemple de fonctionnement de ce modèle. Le diagramme en haut de la figure illustre un logiciel système 1, ou « OS » selon l'expression anglo-saxonne signifiant « Operating system », qui alimente en traitements une unique ressource de contrôle 2, ou « Task Dispatcher » selon l'expression anglo-saxonne. La ressource de contrôle 2 redistribue les traitements à n unités de calcul FU1 à FUn, selon l'acronyme anglo-saxon « FU » signifiant « Functional Unit », seules les unités FU1, FU2, FU3 et FUn étant illustrées par la figure 1. A chaque cycle, la ressource de contrôle 2 assigne concurremment des instructions aux unités FU1 à FUn selon la disponibilité des données venant d'une mémoire centrale 3 partagée par les unités et selon d'éventuels aléas de fonctionnement. Dans le schéma en bas de la figure 1, chaque carré représente une instruction. Une ligne de carrés représente de gauche à droite les instructions exécutées dans l'ordre chronologique par une unité. De haut en bas, les lignes de carrés représentent les instructions exécutées par les unités FU1, FU2, FU3 et FUn respectivement. Une tâche est constituée par une suite d'instructions représentées par des carrés de même texture. Les traits noirs entre les instructions représentent des tâches de contrôle et d'assignation des instructions. Les carrés rayés correspondent à des intervalles de temps non utilisés par les unités, pour cause de dépendances de données ou de ressources par exemple. Cette première solution est par exemple mise en oeuvre dans les dernières générations de processeurs « Intel » (marque déposée), « IBM » (marque déposée) ou « HP Alpha » (marque déposée). Elle consiste à utiliser plusieurs compteurs de programmes, afin d'approvisionner les unités de calcul en instructions issues de plusieurs flots d'instructions. Les dépendances entre tâches étant limitées, le parallélisme au niveau instruction vu par le processeur, ou « ILP » selon l'instruction anglo-saxonne signifiant « Instruction Level Parrallelism », est accru et par voie de conséquence les performances du processeur. La mise en oeuvre de ces solutions est un exercice délicat, la complexité des étages de lecture et de distribution des instructions étant très élevée. En conséquence, ces architectures conduisent à de très gros circuits dépensant plus de 100 watts par composant, ce qui est incompatibles avec les contraintes des systèmes embarqués.

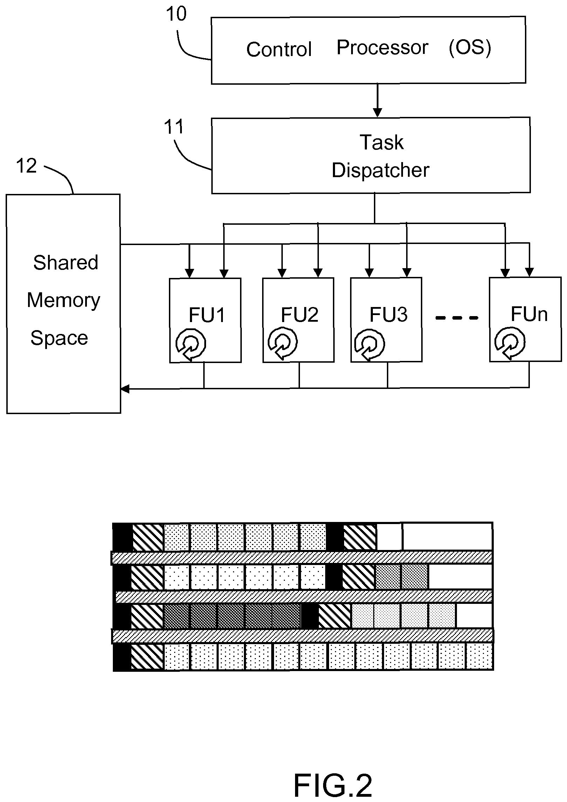

La figure 2 illustre par un diagramme un modèle CMP générique selon l'art antérieur, ainsi qu'un exemple de fonctionnement de ce modèle. Cette solution est généralement privilégiée dans les systèmes embarqués en raison de sa relative simplicité de mise en oeuvre. Le diagramme en haut de la figure illustre un logiciel système 10 qui alimente en traitements une unique ressource de contrôle 11. La ressource de contrôle 11 redistribue les traitements aux n unités de calcul FU1 à FUn, seules les unités FU1, FU2, FU3 et FUn étant illustrées par la figure 2. La ressource de contrôle 11 se charge de déterminer les tâches prêtes à être exécutées. Dès qu'une unité parmi FU1 à FUn se libère, elle se voit assigner une tâche qui est traitée dès la fin du chargement des données venant d'une mémoire centrale 12. Dans le schéma en bas de la figure 2, chaque carré représente une instruction. Une ligne de carrés représente de gauche à droite les instructions exécutées dans l'ordre chronologique par une unité. De haut en bas, les lignes de carrés représentent les instructions exécutées par les unités FU1, FU2, FU3 et FUn respectivement. Une tâche est constituée par une suite d'instructions représentées par des carrés de même texture. Les traits noirs entre les instructions représentent des tâches de contrôle et d'assignation des instructions. Le chargement des données est représenté par des zones rayées. Le principe de cette solution est de distribuer concurremment des tâches aux unités suivant leur disponibilité, et non plus des instructions. Chaque unité exécute alors les tâches qui lui sont assignées, les unes à la suite des autres et jusqu'à leurs termes. Ces architectures se répartissent en deux familles, les structures symétriques et les structures asymétriques. Les structures asymétriques intègrent des unités de calcul FU1 à FUn hétérogènes et optimisées pour un domaine applicatif donné, la distribution des tâches sur ces ressources étant préalablement identifiée au moment de la compilation. Le partitionnement logiciel réalisé à la compilation permet ainsi de simplifier les mécanismes de distribution dynamique des tâches au moment de l'exécution. Parmi ces solutions dites « application driven » selon l'expression anglo-saxonne, se trouvent notamment les plates-formes « OMAP » (marque déposée), « VIPER » (marque déposée), « PNX » (marque déposée) ou « Nomadik » (marque déposée). Les structures symétriques quant à elles sont basées sur l'intégration d'unités de calcul FU1 à FUn identiques. Les unités FU1 à FUn peuvent être généralistes, comme dans les plates-formes Cells de IBM ou MPCore de « ARM » (marque déposée), ou optimisées pour un domaine applicatif donné, à l'image du CT3400 de Craddle Technologies, optimisé pour le codage/décodage MPEG4-AVC. Les solutions symétriques permettent de cibler de très larges gammes de problématiques, alors que les solutions asymétriques sont optimisées pour un domaine applicatif bien identifié.

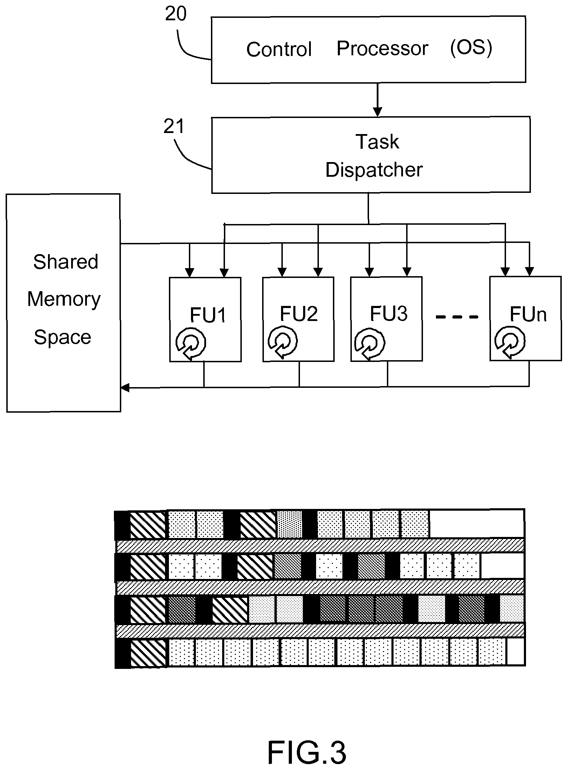

La figure 3 illustre par un diagramme un modèle CMT générique selon l'art antérieur, ainsi qu'un exemple de fonctionnement de ce modèle. Le diagramme en haut de la figure illustre un logiciel système 20 qui alimente en traitements une unique ressource de contrôle 21. La ressource de contrôle 21 redistribue les traitements aux n unités de calcul FU1 à FUn, seules les unités FU1, FU2, FU3 et FUn étant illustrées par la figure 3. La ressource de contrôle 21 se charge de déterminer les tâches prêtes à être exécutées. Dès lors qu'une unité de calcul FU1 à FUn se libère, elle se voit assigner une tâche, qui est traitée dès le chargement des données réalisées. Dans le schéma en bas de la figure 3, chaque carré représente une instruction. Une ligne de carrés représente de gauche à droite les instructions exécutées dans l'ordre chronologique par une unité. De haut en bas, les lignes de carrés représentent les instructions exécutées par les unités FU1, FU2, FU3 et FUn respectivement. Une tâche est constituée par une suite d'instructions représentées par des carrés de même texture. Les traits noirs entre les instructions représentent des tâches de contrôle et d'assignation des instructions. Le chargement des données est représenté par des zones rayées. Chaque unité peut gérer concurremment plusieurs tâches. Dès qu'une tâche est bloquée, par exemple à cause d'un défaut de mémoire cache, l'unité la remplace par une nouvelle. Dans ce cas, la commutation de tâche au sein de l'unité ne se traduit pas par des pénalités de chargement de contexte. Cette solution associe les deux précédents modèles SMT et CMP. Il s'agit ici d'étendre le concept de CMP afin d'autoriser l'exécution de plusieurs tâches sur les unités. Elle n'est pour le moment envisagée que dans le cadre de solutions de type serveur. En particulier, les futures générations de serveurs « SUN » (marque déposée) exploiteront cette technologie, tout d'abord avec l'UltraSparc IV puis avec le processeur Niagara.

Comme déjà énoncé précédemment, les modèles SMT, CMP et CMT illustrés par les figures 1, 2 et 3 ne répondent que partiellement à la problématique des systèmes embarqués. En effet, ces modèles ne font aucune distinction entre les différentes classes de traitement pouvant cohabiter au sein d'une application. Ainsi, les traitements fortement dominés par le contrôle sont traités de manière équivalente, c'est-à-dire sur un même PE, que les traitements réguliers et critiques du point de vue de son temps d'exécution. Les unités de calcul devant supporter les traitements réguliers tout autant que les traitements très irréguliers, il en découle des systèmes construits sur des primitives de calcul non optimisées. Ainsi, les systèmes construits sur ces modèles de l'art antérieur sont souvent inadaptés aux besoins applicatifs en matière de consommation électrique, de rapport coût/performance et de sûreté de fonctionnement. Il faut toutefois mentionner quelques solutions existantes de type CMP qui conduisent à faire la distinction entre les traitements réguliers et les traitements irréguliers. Il s'agit de solutions mises en oeuvre sur des architectures qui intègrent des unités de calcul dédiées aux traitements intensifs. Les traitements irréguliers sont pris en charge avec le logiciel système sur un processeur généraliste. Mais si l'intégration d'unités de calcul dédiées aux traitements intensifs autorise des optimisations permettant d'améliorer notablement les performances ou encore l'efficacité énergétique de ces architectures, l'inefficacité des communications entre les éléments de l'architecture fait malheureusement perdre tout le bénéfice de ces optimisations. En effet, les tâches de traitement doivent communiquer entre elles, elles doivent aussi communiquer avec le logiciel système et les traitements de contrôle. Dans ces systèmes, les communications se font par l'intermédiaire de bus systèmes, moyennant de fortes pénalités tant au niveau des latences que des bandes passantes. Ainsi, ces systèmes sont pénalisés par la latence accompagnant la transmission d'informations de contrôle et par le débit perturbant les transferts de données. Ceci se traduit par une réactivité plus faible de l'architecture et par une incapacité du logiciel système à optimiser l'utilisation des unités de calcul. Il apparaît clairement que l'art antérieur ne fournit pas de solution qui réponde à la problématique des systèmes embarqués dans son ensemble. Notamment, les aspects liés à la forte densité d'éléments de calcul, qui pose des problèmes d'accès aux données, et à l'indéterminisme d'exécution, surtout lors de l'accès aux ressources partagées.

En effet, un problème d'accès aux données se pose lorsqu'il y a une très grande densité d'unités de calculs. Si de très nombreuses unités sont présentes, cela signifie qu'à chaque instant, de nombreuses données sont nécessaires pour alimenter toutes ces unités de façon à ce que le parallélisme potentiel soit effectivement mis en oeuvre. Cependant, l'accès à la DRAM externe est obligatoirement limité, le plus souvent par l'intermédiaire d'un seul bus d'échange. Par conséquent, il est impossible pour la totalité des unités de calculs de s'alimenter à partir de cette DRAM, sachant qu'un bus d'échange est même rarement suffisant pour alimenter correctement une seule unité de calculs. Cela est dû aux différences de performances entre les mémoires dynamiques et les unités de calcul, qui avaient d'ailleurs donné lieu à l'introduction des mémoires caches pour les processeurs dès les années 1980. C'est la raison pour laquelle il est impensable de ne pas avoir de mémoire sur puce sur ces architectures très parallèles. L'accès à la mémoire externe étant un facteur limitant, il faut être capable en cours de traitement d'exploiter les données déjà présentes sur la mémoire de la puce. Ces données proviennent soit de la mémoire externe, elles ont alors été rapatriées auparavant par un traitement différent, soit elles ont été produites localement par un traitement afin d'alimenter de nouveaux traitements. Cela signifie qu'une forte pression est appliquée sur les interfaces de communication afin d'alimenter tous ces PE. Autrement dit, avec une mémoire centralisée sur puce le goulot d'étranglement se situe au niveau de l'accès à cette mémoire centralisée. Avec une mémoire distribuée, le goulot d'étranglement se situe au niveau de l'interface de communication. Il faut donc une interface capable de maintenir une connectivité élevée pour les communications entre unités de calcul. Il y a donc un antagonisme entre la connectivité de la communication qui est un goulot d'étranglement possible du parallélisme si elle est insuffisante et un risque fort de réduire drastiquement les efficacités silicium et énergétique si les interfaces de communication sont surdimensionnées. Enfin, le contrôle de tant de PE constitue également un problème. Car si le contrôle est centralisé pour toutes les unités, l'unique module de contrôle constitue un point unique de synchronisation, qui a toutes les chances d'être un facteur limitant pour l'exploitation du parallélisme lors de l'exécution. D'un autre côté, la maîtrise indépendante de plusieurs dizaines ou centaines de PE par eux-mêmes est pour le moins délicate. En effet, une prise de décision pertinente pour l'ordonnancement des tâches nécessite de connaître les états des traitements amonts. Ces traitements s'exécutant sur des des PE potentiellement éloignés, cela constitue encore une charge supplémentaire pour le système de communication. Ainsi, sauf pour des traitements très réguliers avec un ordonnancement statique comme le traitement de flux de données, cette architecture sans contrôle d'exécution n'est pas efficace. De plus une telle architecture rendrait difficile la mise au point des programmes du fait de son comportement non déterministe. En résumé, ni une architecture complètement répartie, ni une architecture fortement unifiée ne permettent d'obtenir des performances et des efficacités satisfaisantes au niveau de l'exécution, sauf pour une application qui serait soit trivialement parallèle soit strictement en flot de données. Dès qu'une application a besoin de contrôle à un niveau quelconque, alors il faut envisager de trouver un équilibre intermédiaire entre ces deux extrêmes. Mais ceci implique de trouver également un équilibre entre contrôle statique et contrôle dynamique.

Par ailleurs, un problème majeur de la programmation parallèle est la maîtrise des indéterminismes, en particulier dans les accès aux ressources communes telles que le stockage ou la communication. La multiplicité des comportements possibles lorsque sont pris en compte les aléas d'exécution et les latences est beaucoup plus complexe que ceux qui régissent un programme séquentiel. Cela rend potentiellement très difficile voire impossible en pratique la capacité de faire de la mise au point et par conséquent de programmer de tels systèmes. Les risques sont multiples : concurrences d'accès, inter-blocages, incohérences diverses. Dans un système parallèle général il est en pratique impossible de définir proprement un état observable du système et par conséquent de savoir pour quelles raisons un comportement de sortie a été observé à un instant donné. Même en rejouant les mêmes données dans le même ordre et avec des synchronisations comparables, le même comportement en sortie ne peut être observé à cause des divers aléas du système. La maîtrise absolue de tout ce qui se passe dans le système à chaque instant n'est bien sûr pas la réponse recherchée, car ceci risquerait de réduire fortement les performances du système en imposant, par exemple, un certain nombre de synchronisations fortes entre différents éléments. En fait l'objectif qu'il faut rechercher est d'obtenir une exécution qui soit raisonnablement indépendante des aléas d'exécution. C'est bien de cela qu'il s'agit quand on parle de déterminisme d'exécution. Car les risques vis-à-vis d'une exécution à l'indéterminisme non maîtrisé sont nombreux. D'abord, le manque de maîtrise des communications entraîne un mauvais approvisionnement des données d'entrées, ce qui nuit au parallélisme. Le manque de maîtrise des communications nuit également à la maîtrise de l'arrivée des données. Si les communications ne sont plus déterministes, il n'y a plus moyen de vérifier qu'une donnée particulière atteint sa destination lorsque le réseau de communication est fortement chargé ou qu'il existe des inter-blocages. L'absence de localisation des données due à l'absence de déterminisme des temps de communication ne permet pas de définir un état global du système, sauf pour des applications simplistes du type flot de données pur. Il est alors impossible de faire de la mise au point et du contrôle d'exécution. Ensuite, le manque de maîtrise de l'exécution entraîne des problèmes de conflits d'accès aux ressources partagées et des problèmes de mauvaise prise en compte des enchaînements des traitements. Sans une maîtrise de l'exécution, il n'est pas possible de connaître le comportement d'un programme en faute. Des fautes d'exécution détectées trop tard entraînent un phénomène de propagation le long de la chaîne d'exécution parallèle, ce qui rend de plus en plus difficile la détermination de la cause originelle. Enfin, le déterminisme d'exécution permet de maîtriser ce qui se passe dans l'exécution d'une application donnée sur la puce. Il permet d'envisager des moyens de mise au point des programmes et de traçage des erreurs, ces moyens permettant de mettre en évidence des erreurs dès la conception des applications. De tels moyens rendent plus accessibles les points durs de la programmation parallèle. Il s'agit là de l'un des objectifs de la présente invention.

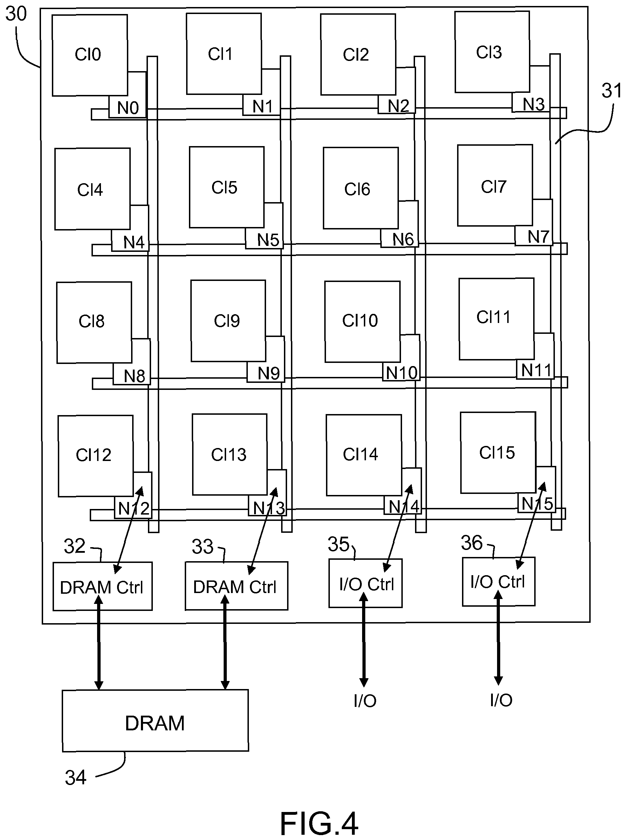

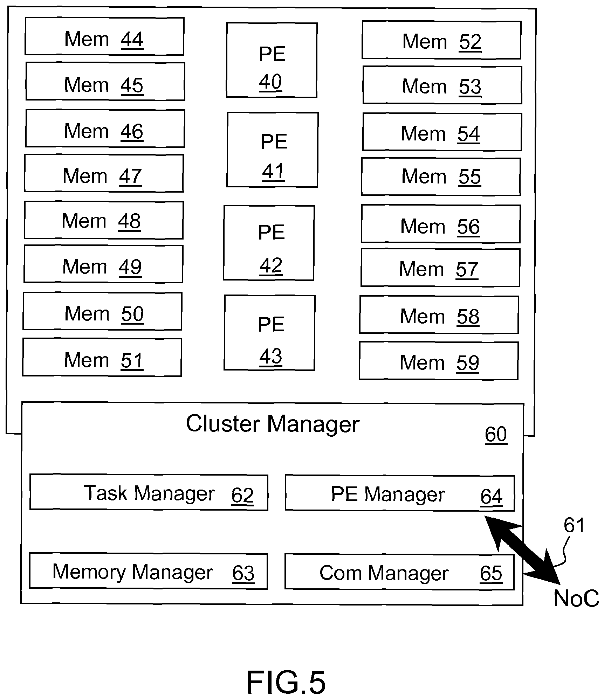

La figure 4 illustre un exemple d'architecture générale selon l'invention. Dans cet exemple, 16 groupements CI0 à CI15 sont disposés sur une puce 30. Chaque groupement parmi CI0 à CI15 regroupe un certain nombre d'unités de calcul. Ces unités ne sont pas représentées sur la figure 4. Elles seront illustrées plus en détails dans la figure 5. Les groupements CI0 à CI15 peuvent communiquer entre eux par l'intermédiaire d'une structure de communication disposée sur la puce 30. Par exemple, la structure de communication peut être un réseau sur puce 31 ou « NoC » selon l'acronyme anglo-saxon signifiant « Network on Chip ». Mais des structures de communication extrêmement variées peuvent être utilisées, comme un bus, des bus hiérarchiques ou des structures points à points. L'utilisation du NoC 31 n'est la solution préférentielle dans la suite de la présente demande que pour des raisons de performance et de facilité d'illustration. Chaque groupement de CI0 à CI15 dispose d'une interface avec le NoC désignée N0 à N15 respectivement. Par ailleurs, une architecture avec des propriétés topologiques intéressantes peut permettre de simplifier grandement l'efficacité des heuristiques de placement des tâches et de routage des communications. En effet, sur des systèmes distribués le placement-routage constitue un problème très complexe. Il peut être NP-complet. Heureusement, il existe des heuristiques connues fournissant des solutions approchées. De complexités diverses, ces heuristiques sont cependant très sensibles à la topologie du support. Ainsi, de manière préférentielle une topologie de type torique est retenue dans le présent exemple. Mais toute autre topologie pourrait être utilisée sans remettre en question l'invention décrite dans la présente demande. Il s'agit alors seulement de trouver un bon compromis entre la complexité du réseau et celle du placement-routage. Par exemple, des contrôleurs 32 et 33 permettant l'accès à une mémoire centrale externe 34 de type DRAM et des contrôleurs d'entrée/sortie 35 et 36 brisent a priori la régularité du tore. Mais tant que les groupements CI0 à CI15 sont identiques entre eux, le problème du placement-routage peut être considéré indépendamment des accès à la mémoire et des entrées/sorties. Ainsi une première étape peut permettre le placement des traitements et le routage des communications entre les groupements. Une deuxième étape peut permettre d'optimiser a posteriori ces accès, en exploitant les propriétés d'invariance par traduction d'une architecture torique.

La figure 5 illustre un exemple d'architecture interne d'un groupement parmi CI0 à CI15, par exemple le groupement CI0. Le groupement CI0 comporte par exemple quatre PE programmables 40, 41, 42 et 43. Par exemple, les unités 40, 41, 42 et 43 peuvent être des processeurs, des « Digital Signal Processor » ou « DSP » selon l'expression anglo-saxonne, ou encore des éléments reconfigurables. Le groupement CI0 comporte par exemple 16 bancs mémoires 44, 45, 46, 47, 48, 49, 50, 51, 52, 53, 54, 55, 56, 57, 58 et 59. L'ensemble de ces bancs constitue dans cet exemple la mémoire locale du groupement, cette mémoire locale pouvant avantageusement être physiquement dédiée au groupement. Un module 60 de gestion du groupement CI0 permet, entre autres choses, de configurer une ressource d'interconnexion interne au groupement CI0, afin de connecter selon les besoins les bancs mémoires 44 à 59 avec les unités 40, 41, 42 et 43. La ressource d'interconnexion n'est pas représenté sur la figure 5. Par la suite le module 60 sera appelé gestionnaire de groupement. Par exemple, une interface DMA 61 programmable est en relation avec le noeud local du Noc 31. L'interface DMA 61 permet de transférer avantageusement des données entre la mémoire locale au groupement CI0 et l'interface N0 du groupement CI0 vers le Noc 31.

Le gestionnaire de groupement 60 est lui-même composé de plusieurs sous-modules fonctionnant simultanément et coopérativement. Selon les contraintes de technologies et de coût, ces sous-modules peuvent être réalisés à divers niveaux d'intrication entre des modules matériels et des modules logiciels.

Par exemple, le gestionnaire de groupement 60 comporte un module 62 de gestion des tâches ou gestionnaire de tâches. L'implémentation à préférer devrait être une solution programmable ou reconfigurable s'appuyant sur des ressources matérielles spécifiques, par exemple des structures de tri ou de mémorisation associative. Ceci permet d'optimiser les performances tout en disposant de la flexibilité nécessaire à l'adaptation de la structure aux contraintes applicatives, de manière similaire aux ordonnanceurs dont les performances dépendent beaucoup du domaine d'utilisation.

Par exemple, le gestionnaire de groupement 60 comporte également un module 63 de gestion de la mémoire ou gestionnaire de mémoire, un module 64 de gestion des unités ou gestionnaire de PE, un module 65 de gestion du réseau et des communications ou gestionnaire de réseau/communication. L'implémentation préférentielle de ces gestionnaires peut être à matériel prépondérant pour maximiser les performances. En tous cas, les modules 62, 63, 64 et 65 peuvent être sollicités simultanément. Mais il faut bien comprendre que le découpage en sous-modules du gestionnaire de groupement 60 présenté ici ne présage pas de la structure matérielle ou logicielle supportant les fonctionnalités de ces sous-modules. Ainsi il est possible de hiérarchiser les fonctionnalités afin de les rapprocher des ressources qu'elles doivent gérer et éviter ainsi la formation de goulots d'étranglement. Un tel exemple sera détaillé par la suite pour une gestion efficace du mode flot de données.

A l'initialisation du groupement CI0 ou lors d'un rechargement forcé, le gestionnaire de tâches 62 et le gestionnaire de réseau/communication 65 reçoivent des tables de description contenant les informations dont ils ont besoin pour fonctionner. Cette procédure d'initialisation peut par exemple être gérée par un maître extérieur distribuant les séquences d'initialisation par l'intermédiaire du réseau interne ou par une procédure interne initialisant en séquence chacun des groupements CI0 à CI15. Du fait de l'accès fréquent à ces tables par les gestionnaires 62 et 65, il est nettement préférable que celles-ci soient stockées dans des espaces mémoire particuliers internes et non sur les bancs mémoires 44 à 59 du groupement CI0.

Les gestionnaires 62, 63, 64 et 65 peuvent recevoir divers événements provenant du groupement CI0, comme des événements de production ou de consommation de données de la part des tâches s'exécutant sur les unités 40 à 43 ou des événements de terminaison de tâche. Afin de gérer efficacement les ressources mémoires, ces gestionnaires peuvent aussi recevoir des événements liés à un dépassement ou à un risque de dépassement des espaces mémoires alloués. De même, ces gestionnaires peuvent demander l'envoi de données qui sont en mémoire. Cette liste d'événements n'est pas exhaustive et tout type d'événement potentiellement pertinent pour l'exécution et le contrôle d'une application peut être mis à disposition de ces gestionnaires selon les besoins applicatifs.

Une tâche logicielle est le résultat du découpage par le programmeur d'une application en traitements sur la base de considérations purement logicielles, par exemple en tenant compte des dépendances de données. Une tâche logicielle ne résulte d'aucune considération matérielle. Au contraire, une tâche d'exécution est liée aux particularités de l'architecture matérielle et du placement-routage, ainsi que d'une multitude d'autres facteurs comme l'ordonnancement ou la capacité d'interrompre des traitements. Dans le groupement CI0 de la figure 5, le gestionnaire de tâches 62 est chargé de gérer l'exécution des tâches d'exécution sur les unités 40, 41, 42 et 43. Par exemple, il peut lui-même être composé d'un module de sélection des tâches et d'un ordonnanceur, ces deux éléments n'étant pas représentés sur la figure. Par exemple, des prérequis minimum de lancement de l'exécution d'une tâche peuvent être fournis dans des tables au module de sélection des tâches à l'initialisation du système. Il peut s'agir d'événements locaux ou exterieurs au groupement. Ces prérequis peuvent alors comprendre non seulement des précédences entre les tâches, mais également des disponibilités d'un minimum de données nécessaires au début de la tâche ou d'espaces mémoires pour stocker les données produites. Que ce soit dans un mode d'exécution de type multitâche parallèle ou dans un mode d'exécution de type flot de données, lorsqu'une tâche donnée est en attente et vérifie les prérequis minimums, elle est réputée allouable par le module de sélection des tâches. L'ordonnanceur choisit alors parmi les tâches allouables lesquelles sont élues pour être exécutées sur les PE 40, 41, 42 et 43. Il faut noter que la politique d'ordonnancement est fortement dépendante des applications. Par exemple, la politique d'ordonnancement pour des vrais systèmes temps-réels est radicalement différente de la politique d'ordonnancement pour des systèmes « best effort » selon l'expression anglo-saxonne. Par conséquent, la politique d'ordonnancement est soit programmable, soit reconfigurable selon le type des applications visées.

Par ailleurs, si les prérequis minimums sont remplis, cela signifie que la tâche peut être allouée à l'une des unités 40, 41, 42 ou 43, c'est-à-dire qu'elle peut commencer à s'exécuter. Mais cela ne signifie pas nécessairement que toutes les données sont disponibles. Ainsi l'exécution d'une tâche n'est pas assurée de pouvoir être menée à son terme sans phases de synchronisation internes qui peuvent être liées à la disponibilité des données ou d'espace mémoire. Comme détaillé par la suite, ces synchronisations internes à une tâche peuvent être gérées localement par le PE 40, 41, 42 ou 43, ou encore faire intervenir le gestionnaire de tâches 62.

Lorsqu'une tâche est allouée à l'une des unités 40, 41, 42 ou 43, le gestionnaire de groupement 60 fait parvenir à l'unité sélectionnée les paramètres dont elle a besoin pour s'initialiser, qui peuvent être, par exemple, le contexte courant si la tâche avait été commutée ou des entrées pour sa table de traduction d'adresse locale. Ces tables, dont le fonctionnement sera détaillé dans la suite de la demande, permettent de faire le lien entre les données telles qu'issues de la programmation et leurs adresses physiques, disponibles uniquement lors de l'exécution de la tâche localement sur un groupement. Cette table permet à une tâche d'accéder aux données qu'elle doit manipuler. La tâche fonctionne de la façon la plus transparente possible vis à vis de l'unité où elle s'exécute et de ses éventuelles évolutions. La tâche peut envoyer des signaux vers le gestionnaire de groupement 60 pour indiquer qu'elle a fini un traitement sur des données, que ce soit en production ou en consommation. La mémoire associée est soit libre pour réallocation à une autre tâche, soit les données qu'elle contient peuvent être utiles en entrée à une autre tâche. Si une tâche fait un accès invalide à la mémoire qui lui est fournie par l'intermédiaire des tables d'allocation mémoire, cela peut provenir de deux situations. Tout d'abord, la tâche considérée peut être en faute et devoir être arrêtée. Sinon, la tâche peut avoir démarré alors qu'elle ne disposait pas encore de la totalité des données nécessaires en entrée ou de la totalité de l'espace mémoire nécessaire en sortie. Il est à noter que cette dernière situation correspond aussi au cas d'un traitement de type flot de données, qui a besoin d'être alimenté continuellement en données, mais dont l'alimentation effective dépend du rythme du flux d'entrée fournit par des traitements précédents. L'espace mémoire alloué à une tâche n'étant pas infini, il peut aussi arriver qu'il n'y ait plus la place nécessaire au stockage des données produites, bien que le flux d'entrée soit toujours disponible. Ces cas ne sont pas des erreurs, mais ils peuvent amener le gestionnaire de tâches 62 à commuter le traitement s'il dispose d'une autre tâche à allouer sur une des unités 40, 41, 42 ou 43. Cela peut dépendre du nombre de traitements et de la politique d'ordonnancement choisie. Si les données ou la mémoire nécessaire à l'exécution du traitement deviennent disponibles, le gestionnaire de groupement 60 peut aussi transmettre une mise à jour des tables de traduction d'adresse de l'unité, afin que celle-ci puisse continuer la tâche en cours. La détection des erreurs lors des accès à la mémoire est primordiale pour avoir un fonctionnement sûr et pour permettre une mise au point efficace des applications. En lecture, ces erreurs traduisent l'accès à une donnée qui n'est jamais disponible car non produite. En écriture, ces erreurs traduisent l'accès à une donnée qui dépasse l'espace mémoire allouable à cette tâche. La distinction entre le cas d'une faute et le cas d'un fonctionnement normal doit se faire par analyse des accès invalides. Une plage d'accès conduisant au cas normal de fonctionnement et une seconde plage conduisant à un cas erroné sont définies hors ligne. Il est aussi possible d'utiliser un « watch-dog » selon l'expression anglo-saxonne, qui permet d'identifier des tâches en attente de données ou d'espace mémoire, dont le comportement est anormal vis-à-vis du comportement temporel dans le pire des cas. Ces tâches sont alors considérées en fautes. Il est aussi possible d'identifier si une tâche doit exploiter le mode flot de données. Il sera alors possible dans certain cas de détecter rapidement une erreur, une tâche non flot de données ne pouvant pas être en attente de données.

Dans l'exemple de réalisation de la figure 4, les groupements CI0 à CI15 et les contrôleurs 32 et 33 disposent avantageusement de moyens d'exécution dédiés aux tâches de communication, comme au moins un moteur DMA. Les moteurs DMA peuvent avantageusement échanger directement des données avec la mémoire locale au groupement. Ces moteurs DMA peuvent avantageusement être utilisés pour exécuter des tâches de communication permettant d'échanger des données entre les groupements CI0 à CI15. C'est pourquoi les tâches de communication seront appelées par la suite « tâches DMA » dans la suite de la demande. Par exemple, une tâche d'émission peut être exécutée dans le groupement où les données sont produites et une tâche de réception peut être exécutée dans le groupement où les données sont consommées. Avantageusement, ces tâches d'émission et de réception peuvent être allouées statiquement aux groupements de la même façon que les autres tâches. Dans la présente invention, les moteurs DMA sont simplement considérés comme des PE particuliers. Les tâches DMA sont gérées de la même façon qu'une tâche de traitement mais nécessitent que les moyens de gestion soient contraints d'utiliser des ressources de type DMA pour les exécuter. En fonctionnement normal, un moteur DMA chargé de la réception de données doit disposer d'un espace dans les mémoires 44 à 59 adapté avec les quantités de données prévues en réception. Si des données arrivent alors qu'il n'y a plus de mémoire disponible, alors il s'agit d'une erreur majeure devant être signalée au gestionnaire de groupement 60. Pour tenter d'éviter cela, un mécanisme permet au groupement CI0 en mode réception comme illustré par la figure 5 de signaler à un groupement d'émission le problème de lien de communication saturé. Dans l'exemple de la figure 5, si le gestionnaire de mémoire 63 n'arrive pas à affecter de la mémoire supplémentaire au lien de communication considéré, alors un signal d'interruption peut avantageusement être envoyé au groupement d'émission. Un second signal peut lui être envoyé dès que suffisamment de mémoire est disponible pour effectuer l'allocation. Ce mécanisme permet de s'assurer de la coopération la plus transparente possible lorsque les flux d'émission d'un groupement vers un autre doivent être dirigés par le consommateur.

Lorsqu'un chargement de données est terminé, que ce soit en voie montante ou en voie descendante, le moteur DMA correspondant envoie un signal au gestionnaire de groupement 60 pour le lui indiquer. Cette fin de chargement peut intervenir de telle manière que des prérequis d'allocation locale de tâches soient alors remplis. Ainsi, du point de vue du groupement CI0 de réception des données, le mécanisme de communication entre groupements est équivalent à la production locale de données par une des unités 40, 41, 42 ou 43. Du point de vue du groupement CI0, il s'agit d'attendre une terminaison de tâche : soit une tâche de production de données exécutées par l'une des unités 40, 41, 42 ou 43 se termine, soit une tâche de réception de données par un moteur DMA se termine. Ceci permet d'éviter de différencier un modèle d'exécution pour les traitements manipulant des données locales et un modèle d'exécution pour les traitements qui utilisent des données distantes. Il est très important de pouvoir montrer qu'une telle unité du modèle d'exécution intra et inter groupements existe effectivement. En effet, c'est cette unité qui permet d'envisager une génération simplifiée des codes, car unifiée. Par conséquent, une tâche DMA est gérée de la même façon qu'une tâche ordinaire par le gestionnaire de tâches 62. Elle doit cependant être davantage contrainte par les données extérieures en circulation sur le réseau de la puce. Notamment, une tâche DMA doit être un programme généré spécifiquement pour les canaux de communication choisis, les bandes passantes attribuées et l'arrangement des données à traiter. Selon les besoins applicatifs, le programme d'une tâche DMA peut aussi être paramétré pour connaître toutes les informations influant sur la communication, informations qui sont non prédictibles hors ligne. A titre d'exemple, une fonction de suivi d'objet dans une image nécessite la manipulation de sous-parties d'image dont la taille et la position n'est obtenue qu'après un traitement de bas niveau.

Le gestionnaire de mémoire 63 est chargé de l'attribution des données contenues dans les bancs mémoires 44, 45, 46, 47, 48, 49, 50, 51, 52, 53, 54, 55, 56, 57, 58 et 59 aux différentes tâches d'exécution dans le groupement CI0. Le gestionnaire de mémoire 63 doit opérer en relation avec les unités 40, 41, 42 et 43 sur lesquelles s'exécutent les tâches. Pour cela, il reçoit divers événements, soit directement des PE qui executent des tâches, soit par l'intermédiaire du gestionnaire de tâches 62. Cela permet de gérer les droits d'accès et les quotas mémoire des tâches. Outre l'attribution d'un espace mémoire à chacune des tâches exécutées sur les unités 40, 41, 42 et 43, le gestionnaire de mémoire 63 joue aussi un rôle important lors des communications inter-groupement en gérant l'espace mémoire associé à chaque canal de communication. Par exemple, le gestionnaire de mémoire 63 peut avantageusement gérer un quota, qui est une taille mémoire allouable à une tâche pour une donnée. Ce quota a une application directe pour les traitements en flots de données, mais son utilité n'est pas limitée à cela. En effet, le dépassement du quota peut générer un événement vers le gestionnaire de tâches 62, qui peut permettre d'interrompre la génération des données en communiquant le cas échéant avec le gestionnaire de tâches du groupement où est produite ladite donnée. Un second événement peut être généré par les processus de consommation lorsque la donnée repasse en dessous de son quota, ce qui peut permettre la reprise de la tâche productrice. Le terme « quota » ne préjuge pas de la place qui est effectivement prise par la donnée, car la latence entre la génération de l'événement et la suspension de la tâche productrice peut amener la donnée à dépasser transitoirement ce quota. Il est de la responsabilité d'outils de dimensionnement hors ligne de majorer les latences et de calculer les quotas en conséquence. Si ces outils font des erreurs, il est simple de le détecter. Soit les allocations dynamiques de mémoire sur le groupement font un dépassement de la mémoire disponible sur le groupement, ce qui génère une exception grave. Soit la mémoire est sous-utilisé et les tâches mises en attente sans justification, ce qui peut se mettre en évidence avec des outils de « profiling » d'après l'expression anglo-saxonne.

Afin de préciser davantage la notion de quota, il est important de noter que ceux-ci s'appliquent à toutes les dépendances de données, c'est-à-dire aussi bien à l'intérieur d'un groupement qu'entre groupements, ou même entre un groupement et la mémoire centrale.

Il existe plusieurs façon d'implémenter des quotas. Dans le présent exemple, pour des raisons d'optimisation d'utilisation de la mémoire, il est avantageux de ne pas utiliser des tampons mémoires séparés pour le producteur et pour le consommateur, sauf dans les cas de communication entre groupements. Cela signifie qu'il est suffisant d'attribuer des quotas soit sur la production des données soit sur la quantité de données offertes à la consommation pour une tâche donnée. Dans les deux cas, la maîtrise optimale de l'exécution impose de savoir quel est le couple producteur-consommateur d'une donnée en sur-quota. Ce couple n'est pas forcément unique pour une donnée particulière, il faut donc pouvoir discriminer parmi les candidats possibles. De cette manière, le gestionnaire de tâches ou le programmeur selon la phase de développement est capable de détecter l'origine exacte des aléas, de sorte à confiner les aléas et à éviter qu'il ne soit porté atteinte directement au fonctionnement normal des autre tâches. Dans la suite du texte, une implémentation particulière de cette identification de sur-quota est montrée en regardant le problème du point de vue des données en consommation. La résolution de cette identification du point de vue d'un quota sur les productions est un problème dual au sens mathématique du terme.

Ce mécanisme peut être néanmoins implémenté de façon simplifiée, si on ne cherche pas la maîtrise maximale de l'exécution, en ne spécifiant pour chaque donnée que le nombre de consommateurs potentiels. Il suffit alors de décrémenter cette valeur à chaque accès potentiel pour déterminer le nombre de consommations potentielles restantes. Il est toutefois dans ce cas impossible de déterminer, dans le cas ou il y a plusieurs consommateurs, lequel est responsable du blocage.

Il existe bien sûr d'autres manières de contrôler la taille des flux lors des communications, l'important étant de pouvoir détecter la perte de données suite à un dépassement des capacités d'un canal de communication. Ainsi il est aussi possible de fournir au producteur une information sur la place mémoire disponible sur le canal de communication. Avantageusement, cette solution peut s'implémenter par des mécanismes de crédits, qui se fait cependant au prix d'une perte de cohérence entre le fonctionnement de la circulation des données à l'intérieur du groupement et l'extérieur du groupement. Le groupement récepteur envoie dans ce cas au groupement contenant le producteur des crédits correspondant à la taille mémoire disponible. L'envoi des données par le producteur est alors conditionné par la présence de suffisamment de crédits.

Le gestionnaire de mémoire 63 reçoit plusieurs signaux. Par exemple, il peut recevoir un signal indiquant la fin d'exploitation d'un bloc de mémoire par une tâche. Il met alors à jour ses tables d'allocation. Si le bloc concerné n'est plus utilisé par aucune tâche d'exécution, y compris par des tâches DMA, alors le gestionnaire libère le bloc pour une réutilisation. Le gestionnaire de mémoire 63 peut également recevoir un signal indiquant l'attribution d'un bloc à une tâche. Par exemple, si un bloc de données est produit par une tâche d'exécution qui ne les consomme pas elle-même, alors le bloc est simplement attribué aux différentes tâches consommatrices. Le gestionnaire de mémoire 63 doit vérifier que cette attribution ne provoque pas de viol de quota mémoire pour la tâche consommatrice vis-à-vis de cette donnée. Les quotas mémoire sont fournis comme des constantes au gestionnaire de mémoire 63 par des outils de placement-routage. Pour chaque quota dépassé, une exception est reportée au gestionnaire de tâches 62. Après un dépassement de quota au niveau d'une tâche, le gestionnaire de mémoire 63 envoie également un signal au gestionnaire de tâches 62 si le sur-quota disparaît au niveau de la tâche en question, suite à une consommation de données.

Dans la présente demande, un bloc désigne le plus petit élément géré par le gestionnaire de mémoire 63. La taille d'un bloc peut varier entre le plus petit élément adressable dans un banc de mémoire 44 à 59 jusqu'à un banc de mémoire complet. Plus la granularité est grossière, plus le gestionnaire de mémoire 63 est simple à programmer. Mais une granularité grossière engendre une très forte sous utilisation des ressources mémoires, ce qui a des conséquences en terme de performances sur le système dans son ensemble. A contrario, une granularité trop fine rend le gestionnaire de mémoire 63 extrêmement complexe, ce qui peut constituer un goulot d'étrangement pour le système. Il y a donc lieu de trouver un bon compromis sur la granularité des blocs. Par ailleurs, il est possible dans le modèle d'exécution proposé par la présente invention d'avoir des blocs de taille variable. Toutefois, une réalisation préférentielle peut consister à utiliser une taille fixe de bloc, de façon à se trouver dans un cadre homogène avec de bonne propriété en termes de déterminisme. De plus, une gestion de blocs de taille variable nécessite d'introduire une fonction de défragmentation pour maintenir continu l'espace d'adressage.

Qu'il soit physique ou virtuel, le routage des communications doit pouvoir être effectué par des outils hors ligne. Il s'agit donc de routage statique ou statique par phase. Afin de garantir des latences maximales de communication et donc une exécution déterministe de l'application, il faut un mécanisme de routage à latence garantie pour les routages effectués hors ligne. Plusieurs méthodes permettent d'arriver à ce résultat, allant de la simple réservation de bande passante jusqu'à des variantes beaucoup plus subtiles de type « Time Division Multiple Access » ou « TDMA » selon l'expression anglo-saxonne. A noter que certains réseaux de communication acceptent des routages explicites fixés, comme les réseaux multi-bus ou les systèmes de commutation d'interconnexions dédiés. Le noeud du NoC 31 local au groupement CI0 est associé aux tâches DMA chargées de faire entrer ou sortir les données du groupement CI0. Avec l'interface DMA 61, il est l'interface qui adapte la tâche DMA avec le protocole du réseau formé par le NoC 31. La façon de propager les données entre les noeuds du réseau n'impacte en revanche pas le procédé d'exécution, qui se veut adapté aussi bien aux réseaux de type « paquet-switch » qu'aux réseaux de type « circuit-switch » selon les expressions anglo-saxonnes. La spécification du chemin à emprunter par les données doit toutefois pouvoir être distribuée. Dans un réseau de type « paquet-switch », il s'agit de paramétrer les chemins de communication dans les paquets de données. Une interface de configuration distribuée peut permettre de configurer partiellement chaque noeud du réseau emprunté par une communication, l'ouverture d'un chemin de communication ne devant pas perturber un chemin existant. Il faut noter que si le NoC 31 est remplacé par une structure de communication du type bus, alors cette structure n'a pas de noeud de réseau et par conséquent seule une interface d'adaptation et d'accès au bus est implémentée dans chaque groupement CI0 à CI15.

Les tâches DMA ont pour but d'assurer les échanges de données entre les groupements CI0 à CI15. Ainsi, elles sont mises en jeu quand les tâches de production et de consommation des données ne sont pas sur le même groupement. Une tâche de traitement s'exécutant sur le groupement CI0 n'utilise que des données présentes dans les bancs de mémoires 44 à 59 dans le groupement CI0. Il est donc nécessaire de faire transférer des données entre les groupements CI0 à CI15 lorsque des tâches exécutées sur des groupements distants ont des dépendances de données entre elles. Ainsi, les tâches d'émission ne créent pas de données, mais lisent des données locales au groupement CI0 pour les réécrire dans l'espace mémoire d'un autre groupement. Les tâches DMA peuvent être plus ou moins complexes en fonction du support matériel dont elles disposent. Ainsi, les fonctions d'accès aux données peuvent être extrêmement basiques, comme de l'accès aux données en mode « burst » selon l'expression anglo-saxonne. Dans ce cas, les tâches de production et de consommation doivent être adaptées pour organiser leurs données afin d'obtenir de bonnes performances. Au contraire, si les fonctions d'accès aux données sont complexes, de type DMA par exemple, alors les tâches DMA peuvent réorganiser les données et ainsi contribuer à la simplification des tâches de traitement. Par exemple, pour réaliser une communication depuis le groupement CI0 et vers le groupement CI15, plusieurs conditions doivent être remplies. Tout d'abord, une tâche DMA gérant l'envoi de données vers le groupement CI15 ou vers la mémoire centrale 34 doit être activée dans le groupement CI0. C'est-à-dire que tous ses pré-requis minimum sont vérifiés, par exemple les destinataires des données sont prêts ainsi que le premier jeu de données à envoyer. La tâche d'émission doit alors être allouée à une ressource DMA dans le groupement CI0. Par ailleurs, une tâche DMA gérant la réception de données venant du groupement CI0 doit être activée dans le groupement CI15. De plus, un espace mémoire doit être disponible pour la réception des données. Enfin, le chemin physique de communication doit être ouvert, c'est-à-dire que les noeuds du NoC 31 doivent être configurés pour permettre la transmission des données. Il apparaît qu'un certain nombre de synchronisations doivent être respectées afin d'assurer une communication. Notamment, il existe une dépendance entre les tâches DMA afin d'assurer que l'émetteur et le récepteur sont bien présents simultanément. Dans le cas particulier de communications parallèles, par exemple lorsque le groupement CI15 peut recevoir des données de plusieurs sources, il faut soit disposer de suffisamment de ressources DMA dans le groupement CI15 pour exécuter des tâches DMA de réception en parallèle, soit que des tâches DMA de réception soient mises en attente dans le groupement CI15, chaque communication intégrant un identifiant permettant de connaître la tâche DMA de réception à exécuter. En effet, chaque canal est géré par un couple de tâches DMA, une tâche en émission et l'autre en réception. Ainsi, une convergence est vue du coté récepteur comme une superposition de tâches DMA, un par canal entrant. Ceci permet de gérer efficacement les déphasages entre les flots entrants. Du côté du groupement CI0 d'émission, il est aussi possible d'avoir plusieurs communications à gérer en parallèle. Si c'est le cas il faut donc soit disposer de suffisamment de ressource DMA dans le groupement CI0, soit d'une fonction d'arbitrage qui gère les tâches DMA. Par exemple, le gestionnaire de tâches 62 peut assurer cette fonction d'arbitre. Cependant, pour des raisons de performance et de gestion de la bande passante sur le NoC 31, il peut s'avérer préférable d'intégrer la fonction d'arbitrage dans un gestionnaire dédié aux tâches DMA situé au plus près des fonctions DMA et par conséquent plus réactif. Il faut ici noter une possibilité d'optimisation intégrant un mode « multicast » et/ou « broadcast » permettant l'envoi simultané vers plusieurs destinataires. Cette option est cependant coûteuse et sa rentabilité doit être étudiée au cas par cas pour chaque type de plate-forme. De la même façon, plusieurs tâches DMA en réception peuvent être gérées, soit par le gestionnaire de tâches 62, soit par le gestionnaire dédié aux tâches DMA. Un tel gestionnaire dédié aux tâches DMA, notamment s'il est mis en oeuvre dans l'une des unités 40 à 43 uniquement, a cependant une limite en termes de nombre de tâches DMA qu'il peut gérer. Il est donc peu probable que toutes les tâches DMA d'une application soient gérées simultanément par ce gestionnaire dédié. Dans un tel contexte, une approche collaborative peut être envisagée entre le gestionnaire de tâches 62 et le gestionnaire dédié aux tâches DMA. Le gestionnaire de tâches 62 aurait par exemple la responsabilité de sélectionner et de désélectionner les tâches DMA devant être gérées par le gestionnaire dédié aux tâches DMA. Avantageusement, l'espace mémoire dans les bancs 44 à 59 nécessaire à la réception de chaque communication peut être garanti lors de la compilation et de la répartition statique des tâches par édition de liens par exemple. L'ouverture du chemin de communication est une étape intimement liée à la nature du réseau intégré dans le système, à savoir le NoC 31 dans le présent exemple de réalisation. Une unité d'interface réseau est donc en charge de l'exploitation du réseau, à savoir l'interface DMA 61 dans le présent exemple réalisation. Par exemple, la mise en paquet et l'écriture de l'entête pour un réseau de type « paquet-Switch » est à la charge de l'interface 61. Pour un réseau de type « circuit-switch » distribué, un port de configuration partielle du réseau doit être prévu. Si le réseau est une structure de type « circuit-switch » non distribuée, une unité centralisée doit être rajoutée dans le système et l'une des deux tâches DMA impliquées dans la communication doit lui demander la création d'un chemin si celui-ci n'existe pas. Pour une structure de type bus, un mécanisme de partage doit être présent dans chaque groupement parmi CI0 à CI15. Par contre, aucun mécanisme de routage n'est alors plus nécessaire, puisque le protocole du bus est chargé de l'identification et de la synchronisation des éléments communicants.

Il est important de constater que la présente invention, quoique basée sur une architecture matérielle en parallèle et sur un modèle d'exécution permettant d'exploiter ce parallélisme, se prête cependant aux traitements séquentiels de type flot de données. Dans l'exemple de la figure 5, plusieurs moyens peuvent être utilisés pour synchroniser et partager des données entre les PE lors d'un traitement de type flot de données. Il est cependant important de maintenir une solution uniforme inter et intra groupements, pour faciliter la programmation de l'architecture. Par exemple, les tâches exécutées dans le groupement CI0 et atteignant leurs quotas de mémoire peuvent se mettre automatiquement au repos sans faire intervenir le module 60 de gestion du groupement. Il s'agit là d'un mécanisme de synchronisation locale, qui doit être disponible non seulement entre chacune des unités parmi 40, 41, 42 et 43 participant au traitement flot de données, mais également disponible entre chacun des groupements parmi CI0 à CI15 si le traitement est distribué entre des groupements. La détection d'un espace mémoire de destination plein ou vide peut être réalisé grâce au système de quotas présenté précédemment. De manière préférentielle le module 60 de gestion du groupement est utilisé pour gérer les synchronisations entre les différents PE. Même si ce procédé augmente les pénalités dues aux synchronisations, il permet d'avoir une vision plus générale de l'état d'exécution des différentes tâches allouées. Ce mécanisme fait l'objet d'une analyse plus détaillée à travers quelques exemples applicatifs.

Une specification fonctionnelle de chacun des moyens de gestion peut être proposée, indépendanment des modes de réalisation retenus.

Les moyens de gestion des tâches regroupent l'ensemble des mécanismes qui permettent de mettre à jour l'état des tâches sur le groupement. Une implémentation mimimale devrait faire apparaître au moins deux états possibles pour une tâche donnée : l'état d'attente et l'état prêt. L'état d'attente est caractérisé par le fait que la tâche ne peut être exécutée par manque d'au moins un élément nécessaire à son exécution. La liste des éléments nécessaires peut être très variée. A titre d'exemple, peuvent être citées la disponibilité d'un PE, la disponibilité de mémoire ou de données à traiter. Cette liste peut aussi dépendre de la nature de la tâche. Ainsi une tâche de communication n'aura pas forcemment les même types de besoins qu'une tâche de traitement. L'état prêt est caractérisé par le fait que la tâche puisse disposer de toutes les ressources nécessaires à son exécution. L'allocation réalisée par les moyens de gestion des tâches est virtuelle, car ils ne sont pas en charge de la mise en place du lien physique entre la tâche et les ressources d'execution. La façon d'implémenter le système peut conduire à l'ajout d'états supplémentaires, de façon à mieux prendre en compte certaines évolutions dans l'exécution des tâches. A titre d'exemple, une tâche donnée peut avoir commencé son exécution, puis être préemptée en cours de traitement.

Les moyens de gestion des PEs regroupent l'ensemble des mécanismes qui permettent d'allouer une tâche à un PE. Ainsi, on peut associer à chaque PE au moins deux états : l'état libre et l'état alloué. L'état libre est caractérisé par le fait que le PE associé n'est pas alloué à une tâche. L'état alloué est caractérisé par le fait que le PE associé est alloué à une tâche. Contrairement aux moyens de gestion des tâches pour lesquels l'allocation est virtuelle, les moyens de gestion des PEs réalisent une allocation physique des ressources. Comme pour la gestion des tâches, la façon d'implémenter le système peut conduire à l'ajout d'états supplémentaires de façon à mieux prendre en compte certaines évolutions dans la gestion des PE. A titre d'exemple, la mise en oeuvre de modes de repos ou de basse consommation des PEs peut être pris en charge.

Les moyens de gestion de la mémoire regroupent l'ensemble des mécanismes qui permettent d'allouer de la mémoire, de l'associer à une ou plusieurs tâches données et de la maintenir tant que la donnée est potentiellement utile. L'allocation d'espace mémoire vise à réserver une portion d'espace mémoire préalablement considérée comme libre, c'est-à-dire ne contenant plus de données qu'il est nécessaire de concerver localement, afin de pouvoir l'associer à des tâches. L'association permet ensuite à l'espace mémoire alloué d'être utilisé par une ou plusieurs tâches pour les besoins de traitement : par exemple lecture ou écriture des données respectivement produites ou consommées, ou même pour des traitements intermédiaires. Une gestion des droits pourra assurer qu'une donnée non stable, c'est-à-dire en cours d'écriture ou de modification par une tâche, n'est pas disponible en lecture pour d'autres tâches. Enfin, un espace mémoire peut être libéré soit sous la forme d'une commande explicite soit parce qu'elle n'a plus aucune attribution, soit par une combinaison des deux mécanismes.

Lorsque plusieurs groupements doivent échanger des données ou des informations par le biais d'un canal de communication, il est utile de mettre en place des moyens de gestion des communications qui regroupent l'ensemble des mécanismes permettant le contrôle et la gestion de la structure de communication. Ces moyens de gestion sont très dépendants de la nature de la structure de communication. Ainsi, dans le cas de l'utilisation d'un bus, cela peut inclure la gestion des priorités et de l'adressage. Dans le cas d'un NoC, cela peut inclure une gestion du routage et de la bande passante associée à chaque communication.

Les moyens de gestion du groupement sont constitués au minimum de l'ensemble des moyens de gestion suivants : moyens de gestion des tâches, moyens de gestion des PEs, moyens de gestion de la mémoire. Si plusieurs groupements ont des traitements devant communiquer entre eux, il est également utile d'avoir un moyen de gestion des communications. Toutes les interactions entre ces moyens de gestion et le reste de la plateforme, ainsi que les mécanismes utiles à leurs synchronisations, sont regroupées au sein des moyens de gestion du groupement.

Le fonctionnement de la présente invention est illustré par la suite au travers de trois exemples d'exécution très différents. Un exemple d'application de décodage vidéo illustre un traitement séquentiel en flot de données. Un exemple d'application de morphage, ou de « morphing » selon l'expression anglo-saxonne qui sera utilisée par la suite, illustre un traitement beaucoup moins régulier au niveau de ses accès. Enfin, une application de traitement d'image illustre un traitement massivement parallèle, au flot de contrôle dynamique.

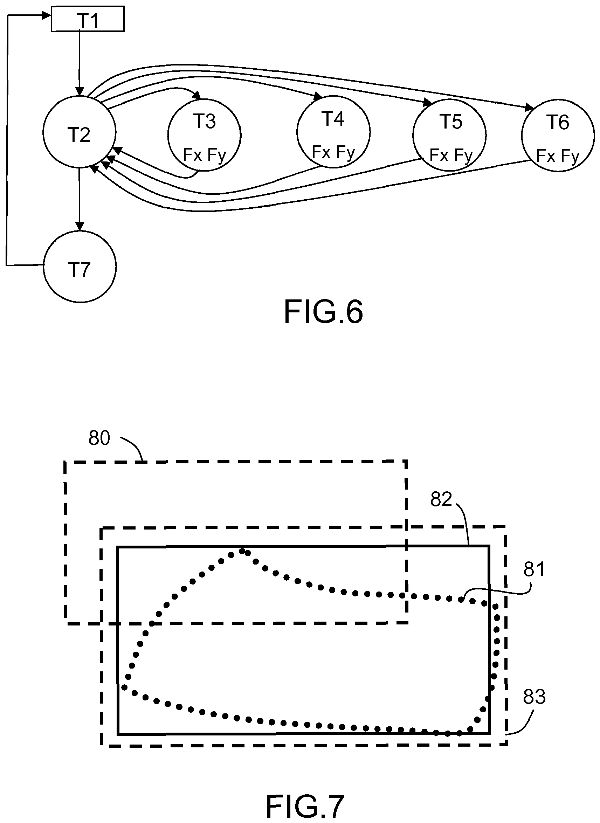

Les figures 6 à 11 illustrent un exemple d'exécution d'une application de morphing. Une application de morphing est utilisée pour l'estimation de mouvement dans certains algorithmes avancés de compression et décompression d'image, afin de tenir compte d'effets plus subtils que l'habituelle traduction de « macroblocs » selon la terminologie usuelle en traitement de l'image. Beaucoup moins régulière au niveau de ses accès qu'une estimation de mouvement traditionnelle de type « block-matching », elle permet en théorie d'accroître les taux de compression obtenus dans le codeur vidéo. Les données sont plus compactes, mais au prix de calculs plus complexes et plus dirigés par les données. C'est un algorithme plus intelligent, et à ce titre, il est plus exigeant en accès mémoire et en traitements. Le principe de l'algorithme est une déformation de l'image qui permet, entre autres, de modéliser des zooms ou des rotations de la caméra. Cet algorithme est également utilisé pour les calculs de texture dans les systèmes de rendu graphique. L'algorithme de base du morphing peut être traduit de la manière suivante sous forme de code en langage C : 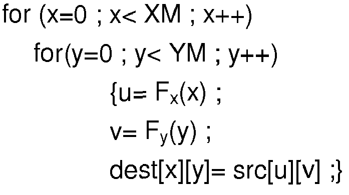 Les constantes XM et YM représentent respectivement la largeur et la hauteur d'une zone d'intérêt. Plusieurs hypothèses importantes sont faites pour ne pas simplifier outre mesure l'implémentation de cet algorithme sur l'architecture proposée. Tout d'abord, l'hypothèse est faite que les fonctions Fₓ et F_{y} sont dérivables. Cette hypothèse est raisonnable pour un système de transformation réel. De plus, l'hypothèse est faite que le temps de calcul des fonctions Fₓ et F_{y} est suffisamment grand par rapport au temps de communication avec la mémoire centrale. Cette hypothèse est nécessaire pour la mise en oeuvre du parallélisme sur une telle plate-forme, sinon le traitement est entièrement dirigé par les transmissions avec la mémoire et le parallélisme ne peut pas être exploité. Enfin, l'hypothèse est faite que l'image est Haute Définition (HD), ou pour le moins qu'elle ne peut pas être contenue dans les mémoires locales des groupements embarquées sur la puce, c'est pourquoi les champs « src » et « dest » sont contenus dans la mémoire centrale. Cette hypothèse est évidente dans le cadre des technologies actuelles. Elle permet également de montrer concrètement comment se déroulent les échanges avec la mémoire centrale.

Pour la découpe de cette partie de code en activités élémentaires, il est supposé qu'elle fonctionne sur quatre groupements et que la généricité du raisonnement ne doit pas être rompue. Mais cela signifie que les traitements sont suffisamment calculatoires pour occuper ces quatre groupements. Dans le cadre de la recherche de transformations, cette hypothèse est tout à fait réaliste. Ainsi, sur chaque groupement, la répartition des traitements sur les PE est la suivante :
- quatre tâches d'exécution pour les calculs Fx et Fy, qui sont les calculs les plus coûteux ;
- un traitement chargé d'évaluer les limites du macrobloc à charger depuis la mémoire centrale et depuis les groupements voisins, le cas échéant ;
- un traitement DMA pour le chargement des macroblocs ;
- un traitement principal de la boucle qui effectue le morphing avec le bloc chargé à partir du macrobloc calculé/prédit ;
- un traitement DMA pour signaler le macrobloc actuellement chargé en mémoire locale du groupement aux groupements voisins ;
- un traitement DMA pour sortir les données transformées en mémoire centrale.

Dans un diagramme de tâches, la figure 6 illustre des tâches T1, T2, T3, T4, T5, T6 et T7 pouvant correspondre à ces traitements. Sur cette figure, les tâches exécutées sur les PE apparaissent dans un cercle et les tâches exécutées sur les DMA dans des rectangles. Ce formalisme sera respecté tout au long de la présente demande. Les tâches T1, T2, T3, T4, T5, T6 et T7 seront détaillées par la suite.

Le routage des communications est fait en chaîne circulaire entre les différents groupements. Le placement des tâches est fait séquentiellement dans l'ordre de la chaîne définie par les communications. Le premier groupement reçoit la tâche de traitement du premier macrobloc, le deuxième groupement reçoit le traitement du deuxième macrobloc et ainsi de suite jusqu'au quatrième groupement. Puis le premier groupement enchaîne sur le cinquième macrobloc et ainsi de suite. Tous les traitements des blocs d'image sont placés sur les quatre groupements alloués.

Le déroulement local d'une exécution sur un groupement est fait comme suit. L'accès DMA est enclenché pour le macrobloc prédit. L'initialisation de la prédiction du macrobloc est faite comme un quadrillage uniforme de la page Haute Définition (HD), le quadrillage étant proportionnel en hauteur/largeur et adapté à la capacité mémoire d'un groupement. Par exemple, il ne doit pas remplir plus de 75% de la mémoire locale du groupement. Dès que le chargement en cours termine une ligne de macrobloc prédit, le traitement DMA avertit le gestionnaire de mémoire et de tâche. Le traitement principal commence en parallèle avec le chargement. Néanmoins, ce traitement ne peut réellement avoir lieu que dans la zone de traitement du bloc courant, c'est-à-dire à partir de Fx(xm) et Fy(ym). Ceci est assuré par un mécanisme de préparation des données en local du PE de traitement, couramment appelé « fetch » selon l'expression anglo-saxonne.

Le mécanisme de « fetch » bloque simplement la tâche si les données sources ne sont pas encore arrivées au moment de les lire, ceci jusqu'à ce que les données soient disponibles. Si les coordonnées de source calculées en parallèle sur les quatre PE ne sont pas encore disponibles, la tâche est arrêtée par le gestionnaire de tâches pour cause de dépendance non résolue. Elles sont alors à l'état « stalled » d'après l'expression anglo-saxonne. Si les coordonnées de source calculées dépassent le macrobloc élargi prédit, le gestionnaire de mémoire fait remonter une exception au gestionnaire de tâches pour cause de dépassement des zones de mémoire allouées. Ce comportement est tout à fait exceptionnel pour des transformations régulières. Ainsi, ce mécanisme d'autorégulation produit le macrobloc de sortie au fur et à mesure de l'arrivée des données d'entrées. Les cas d'erreur sont également gérés naturellement.

Le traitement principal alimente le traitement DMA de sortie au fur et à mesure, par l'intermédiaire d'une zone mémoire utilisée en mode tampon ou mode « buffer » selon l'expression anglo-saxonne. Le traitement principal alimente les quatre traitements de calculs de transformation/morphing avec des paires de points (x,y) à calculer/traiter et attend les résultats (u,v) de leur part. Il fournit aussi les limites courantes de la transformation, afin d'alimenter le traitement de prédiction du prochain macrobloc mémoire. Le traitement de prédiction du prochain macrobloc utilise les données précédentes de limites de macrobloc et les données courantes afin de faire une prédiction. Par exemple, il peut faire la prédiction par extrapolation de la dérivée ou éventuellement de la dérivée seconde. Mais vu la différence entre les tailles d'images et les tailles de macroblocs, il est probable que la différence entre les deux algorithmes d'extrapolation soit peu sensible.

La figure 7 illustre un algorithme de prédiction et de transformation de bloc. La transformation générale d'un bloc rectangulaire 80 en (x,y) par les fonctions Fx et Fy aboutit à un domaine 81 en (u,v) de la source. Un cadre 82 est le rectangle d'enveloppe en XY prédit grâce à l'extrapolation linéaire ou quadratique issue des transformations précédentes du même domaine (x,y). Pour cela, les vitesses de ce rectangle d'enveloppe sont évaluées à chaque transformation. En cas d'extrapolation quadratique, les accélérations de ce rectangle d'enveloppe sont évaluées. Une marge 83 est prise autour de ce rectangle de prédiction afin d'être raisonnablement sûr que les points sources de la transformation sont dans la mémoire locale du groupement. Ce n'est pas obligatoire, mais permet d'éviter le processus d'exception. Les dimensions du rectangle final à charger sont donc dépendantes des données. Mais si les dimensions en X et en Y peuvent varier très librement en fonction des transformations effectuées, la surface du rectangle est quant à elle constante. Donc la mémoire utilisée est constante sur un groupement. De plus, une optimisation possible consiste à faire en sorte que les données supplémentaires chargées ne soient pas jetées, mais transmises au groupement voisin, de sorte qu'il y ait moins d'accès inutiles à la mémoire centrale.

La tâche T1 est une tâche de chargement DMA du bloc mémoire, qui est rangé en tenant compte des données déjà présentes sur le groupement adjacent. La dépendance de cette tâche est liée à la synchronisation d'image et à la disponibilité d'un canal de communication avec la DRAM. Pour le premier groupement, la tâche T1 est activée dès le lancement de l'application. Les tâches T1 s'exécutant sur les autres groupements s'activent ensuite à mesure que les blocs sont consommés. Les paramètres calculés au coup précédent sont utilisés. S'il s'agit de la première image, T1 utilise les paramètres de téléchargement par défaut. La tâche T2 est de boucle principale, c'est-à-dire une tâche de distribution du calcul de morphing. La dépendance de T2 se fait sur la disponibilité de données du bloc de chargement fourni par T1. Les tâches T3, T4, T5 et T6 sont des tâches de calcul des fonctions de morphing. Elles alimentent des tampons de prédiction d'enveloppe XY en fournissant les couples (u,v) extrêmes pour chaque traitement de ligne, la tâche T3 pour extrémal obtenu depuis les x minimums et la tâche T6 pour extrémal obtenu depuis les x maximums. La tâche T7 est une tâche de calcul de prédiction de rectangle. La dépendance en données se fait sur les données fournies par T3 et T6. Elle fournit le rectangle de prédiction pour la tâche T1 au prochain passage.

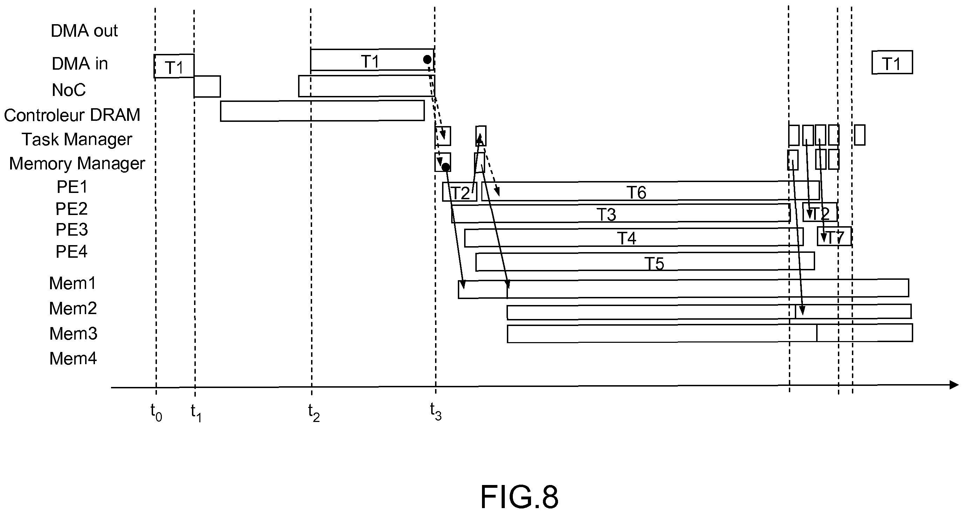

La figure 8 illustre par un chronogramme un scénario d'exécution sur un groupement. La figure 8 est simplifiée, car elle ne montre qu'un seul transfert de paquets depuis la mémoire. Une exécution réelle donnerait lieu à plus de recouvrement entre les communications et l'exécution.

Tout d'abord, la tâche T1 fait la demande de chargement du rectangle prévu au contrôleur de DRAM, puis attend d'un instant t₀ à un instant t₁.

Puis, le contrôleur de DRAM utilise les informations fournies par les tâches T1 pour télécharger les blocs mémoire en DRAM et envoyer au fur et à mesure les blocs aux différents groupements, de l'instant t₁ à un instant t₂ puis de l'instant t₂ à un instant t₃.

Ensuite, lorsque des données sont transmises au groupement à l'instant t₂, T1 prend la main et annonce le chargement de chaque bloc de données au contrôleur de tâches pour la résolution des dépendances et au gestionnaire de mémoire pour la mise à jour des blocs mémoires affectés. Ceci est illustré par deux flèches partant de T1 à l'instant t₃.

Par la suite, le gestionnaire de tâches met T2 en exécution. La tâche T2 distribue des points de calculs de couple (u,v) aux tâches T3, T4, T5 et T6.

Puis, le gestionnaire de tâches met les tâches T3, T4, T5 et T6 comme tâches à exécuter sur les PE. Quatre PE libres ayant été attribués aux tâches, le gestionnaire de tâches transmet au gestionnaire de mémoire pour chaque tâche la table de correspondance avec la mémoire virtuelle, également appelée « mapping de la mémoire virtuelle », qui leur a été associée par les outils de compilation. Cette étape peut être démarrée bien avant si des PE sont libres, puis au fur et à mesure de leur libération. Par exemple, une flèche fin de T2 sur PE1, sur gestionnaire de tâches, revient sur T6 ordonnancé sur PE1.

Ensuite, le gestionnaire de mémoire construit les tables de traduction locale de chaque tâche avec les données actuellement présentes et les transmet aux PE choisis par le gestionnaire de tâches. Ceci est illustré par une flèche partant du gestionnaire de mémoire et allant vers Mem1 juste après l'instant t₃. Des flèches identiques vers Mem2 et Mem3 pour les tâches T3/T4 et les tâches T5/T6 respectivement n'ont pas été représentées pour simplifier la figure 8. Il faut noter que, sur le chronogramme de la figure 8, les flèches allant du gestionnaire de mémoire et allant vers les mémoires ne correspondent pas à un signal réel depuis le gestionnaire de mémoire vers lesdites mémoires. Elles correspondent simplement à la mise à jour des tables d'attribution du gestionnaire de mémoire.

En parallèle, le gestionnaire de tâches fournit à chaque PE choisi l'ordre de commencer la tâche. Dès que l'agencement du code est fourni par le gestionnaire de mémoire, le début du code est chargé dans la mémoire locale du groupement et l'exécution commence : début de la boucle puis lancement des calculs de Fx et Fy par les tâches T3, T4, T5 et T6, dont le lancement se fait au fur et à mesure après l'instant t₃.

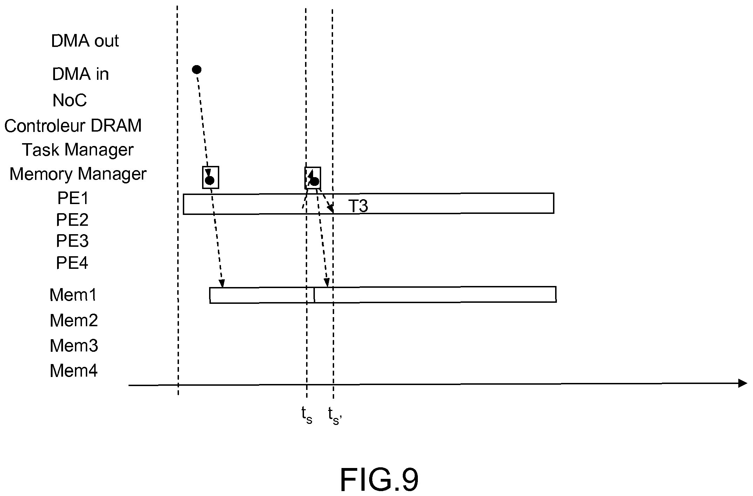

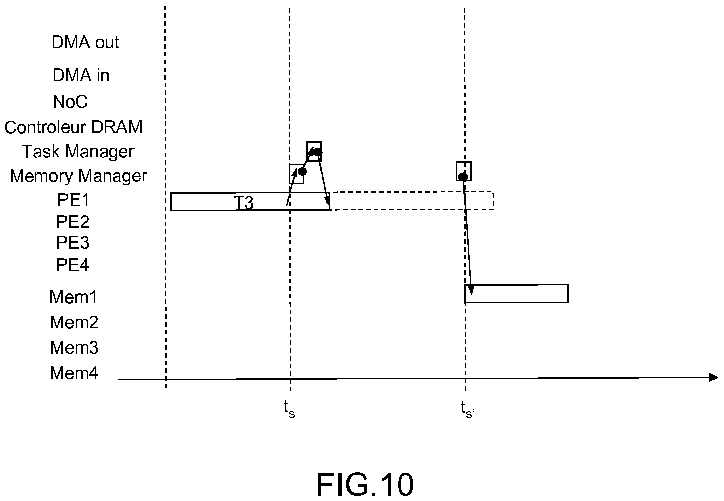

Lorsque les calculs d'un couple (u,v) sont finis pour T2, la suite de l'exécution lui fait accéder à une coordonnée de l'image source. Les cas suivants peuvent se présenter :
- la donnée est en mémoire locale du groupement. Afin d'être manipulée cette donnée doit être accedée par le PE assigné à son traitement. Deux cas peuvent donc se produire en fonction de l'état de la table de traduction du PE :
   ∘ la table de traduction locale du PE est déjà à jour : le PE sait donc y accéder et peut donc manipuler la donnée afin de réaliser le traitement qui lui est assigné.
   ∘ la table de traduction locale du PE n'est pas à jour : le PE ne sait pas comment accéder à la donnée, l'information est transmise au gestionnaire de mémoire qui renvoie une mise à jour de la table de traduction locale du PE. La figure 9 illustre par un chronogramme la durée correspondant au temps de suspension de PE1 entre deux instants tₛ et t_{s'}, temps nécessaire à la mise à jour de sa table de traduction.
- la donnée n'est pas en mémoire locale du groupement. Dans un premier temps, toutefois, cela se passe comme dans le cas précédent, lorsque la table de traduction locale n'est pas à jour : le PE transmet la demande au gestionnaire de mémoire. Dans un deuxième temps, deux sous cas peuvent être distingués :
   ∘ la donnée fait partie des données qui sont prévues sur le groupement d'après les données fournies par le gestionnaire de tâches à la construction des tâches. L'information selon laquelle la tâche qui s'exécute sur le PE est bloquée, en attente de données de la tâche T1, est envoyée au gestionnaire de tâches par le gestionnaire de mémoire. La figure 10 illustre par un chronogramme la durée entre un instant tₛ et un instant t_{s'} correspondant au temps minimum de suspension de l'exécution de T3.
   ∘ la donnée ne fait pas partie des données prévues sur le groupement par la tâche T7 de prédiction d'enveloppe: une exception est remontée par le gestionnaire de mémoire au gestionnaire de tâches pour accès mémoire invalide. Le gestionnaire de tâches lance une tâche T1' sur cet événement pour charger la donnée manquante et son voisinage. La tâche T1' n'est pas représentée sur les figures.

Ensuite, le point source est stocké dans la mémoire locale du groupement de production de la tâche. A chaque fin de ligne, la tâche T2 produit les extrema de la ligne courante pour (u,v), afin d'alimenter la tâche T7. Pour toutes les lignes ou quelques lignes, la tâche T2 envoie un signal de production intermédiaire pour les extrema, de façon à permettre à T7 de continuer son exécution sur les données nouvellement produites.

La tâche T7 attend au moins un événement de T2, selon le même principe qu'entre T1 et T2. Elle utilise les extrema, plus ceux de l'image précédente pour calculer le nouveau rectangle à charger, voire ceux de l'image encore précédente pour un calcul au second ordre. Si le gestionnaire de tâches le permet, c'est-à-dire si un PE est libre, la tâche est périodiquement remise en exécution à chaque arrivée d'une paire d'extrema. Une fois par bloc, la tâche T6 produit sa prédiction pour un futur chargement et envoie l'événement de fin de traitement du bloc.

La tâche DMA T8 fusionne les tampons de production de T3, T4, T5 et T6 au fur et à mesure de l'arrivée d'un quartet d'événements de production pour ces 4 tâches. Elle transmet la mise à jour de l'image destination au contrôleur DRAM. Elle transmet les données d'image source non utilisées au groupement suivant dans la liste, car il a besoin ce celles-ci pour les traitements.

Selon les dépendances, la terminaison des tâches doit donc commencer par T1, sachant qu'une tâche T1' peut rarement apparaître. Puis suivent les tâches T3, T4, T5 et T6 selon un ordre qui dépend de la difficulté des traitements et des aléas de chargement. Ensuite suivent T2 et T7 dont le traitement est court, avec des données uniquement locales. Enfin suit une tâche T8, non représentée sur les figures, qui marque la fin du traitement d'un bloc. A partir de la fin de T7, le gestionnaire de tâches peut relancer T1 avec un nouveau bloc.

Le gestionnaire de tâches est composé de divers éléments parmi lesquels :
- une liste des tâches comprenant, pour chaque tâche, la liste des dépendances minimales nécessaires à son démarrage, les événements conditionnant son exécution comme un dépassement de quota ou une attente de données, et éventuellement un descriptif de l'espace mémoire virtuel manipulé;
- une liste des PE virtuels utilisables par le gestionnaire de tâches pour allouer les prochaines tâches. Cette liste est dite virtuelle car l'identification physique de l'allocation des PE peut-être gérée par les moyens de gestion des PE, vis-à-vis d'une disponibilité des PE sans nécessairement les identifier physiquement ;
- une liste de tâches prêtes à être exécutées, satisfaisant à tous leurs prérequis ;
- un ordonnanceur chargé de faire la correspondance entre les tâches prêtes à être exécutée et les PE disponibles sur le groupement. Les politiques d'ordonnancement les plus pertinentes dépendent en général du champ d'application. Par exemple, un ordonnancement temps-réel critique peut utiliser avantageusement une politique d'ordonnancement fondée sur l'algorithme d'ordonnancement EDF (« Earliest Deadline First ») qui ordonnance en priorité les tâches dont les échéances sont les plus brèves. Pour un système multimédia avec des contraintes moins fortes, un ordonnancement moins coûteux et en temps linéaire est probablement mieux adapté. C'est pourquoi il est préférable que l'ordonnanceur soit programmable, reconfigurable ou au moins paramétrable.

Le rôle principal du gestionnaire de tâches sur un groupement est donc de gérer l'adéquation entre les PE et les tâches. Il doit aussi gérer l'enchaînement entre les tâches, ce qui revêt en général deux aspects : un aspect dépendance de données et un aspect contrôle. A noter que, le plus souvent, un aspect contrôle peut être simulé par une dépendance de données correctement mise en place. Ainsi, le gestionnaire de tâches est un des éléments centraux du groupement. Il reçoit des événements multiples provenant des différentes tâches y compris les tâches DMA, ces évènements concernant la production de données. Mais il reçoit également des événements provenant du gestionnaire de mémoire, pour signaler des tâches qui sont en attente de données ou d'espace mémoire disponible. De façon plus exceptionnelle, ces événements signalent les tâches qui dépassent leur quota de mémoire allouée. Dans ce dernier cas, le rôle du gestionnaire de tâches est de chercher à limiter les problèmes, en bloquant si possible la tâche qui a créé le dépassement de quota. Cet aspect sera détaillé par la suite, en relation avec les contrôles de flots sur le second exemple d'application.

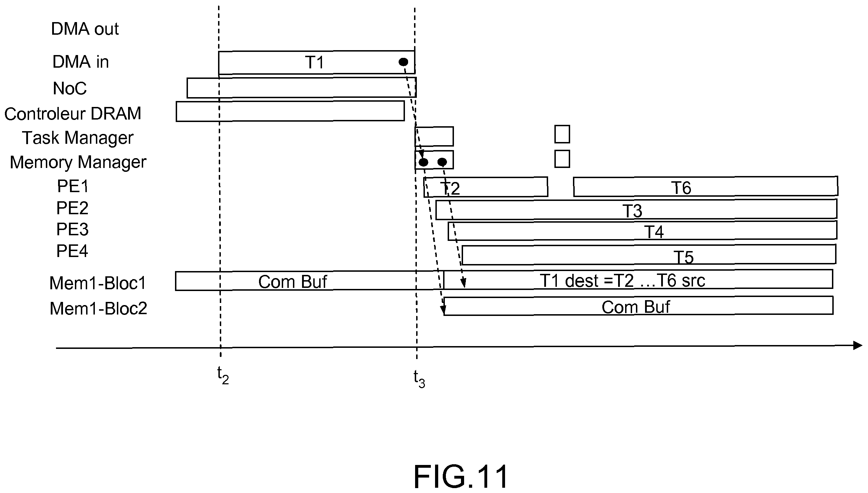

Le gestionnaire de mémoire gère l'espace mémoire local du groupement. Il doit permettre une exécution la plus transparente possible des tâches sur les PE. Dans le présent exemple, il doit pouvoir rendre transparent l'utilisation d'une image Haute Définition qui ne tient pas sur la puce, et encore moins sur un groupement. Pour cela, il a besoin de tables de production et d'utilisation des données, qui donnent une correspondance entre la mémoire virtuelle et les tâches dans la mémoire locale du groupement. Il a aussi besoin de l'assistance des tâches qui doivent lui indiquer quand elles ont produit ou fini d'utiliser des données stockées dans la mémoire locale du groupement, en envoyant un signal au gestionnaire de groupement. Pour cela, des instructions spéciales peuvent par exemple être insérées dans le code des tâches par les outils de compilation ou par le programmeur. Il doit aussi fournir et mettre à jour les tables de traduction mémoire des PE. Dans le scénario d'exécution de l'application de morphing précédemment illustré, les interactions entre le gestionnaire de mémoire et le reste du groupement peuvent être synthétisées de la manière suivante :
- tout d'abord, les différentes tâches sont démarrées : tant que la tâche T1 n'a pas reçu les données demandées, les tables de traduction au niveau groupement et au niveau des tâches T2 à T6 ne sont pas approvisionnées avec les données du bloc prédit. Si néanmoins les accès mémoire se trouvent dans le bloc prédit, le gestionnaire de mémoire indique simplement au gestionnaire de tâches que les données demandées par les tâches ne sont pas encore disponibles. Le gestionnaire de tâches peut, selon la politique d'ordonnancement et les tâches présentes, choisir de laisser les tâches en attente ou les commuter pour en faire passer d'autres plus urgentes :
   ∘ si l'adresse demandée est en dehors de ce que la tâche est censée pouvoir accéder, une exception est remontée au gestionnaire de tâches. S'il s'agit d'un accès à l'image source, la procédure d'exception doit donc gérer une erreur de prédiction de chargement. Pour les autres cas, il s'agit bien d'une erreur, à traiter comme telle. La façon de gérer cela au niveau du gestionnaire de tâches dépend de son niveau de programmabilité. Cela peut-être programmé comme programme d'exception du gestionnaire de tâches, ou simplement être traité comme un signal pour lancer la tâche T1' de chargement exceptionnel.
- à chaque fois que T1 produit un bloc de données, elle en informe le gestionnaire de mémoire. Comme illustré par la figure 11 grâce à un détail du chronogramme aux environs de l'instants t₃, le gestionnaire de mémoire :
   ∘ désalloue un bloc 1 correspondant à la communication, ce qui est illustré par « Com. Buf. » sur « Mem1-bloc1 » à l'instant t₃ sur la figure 11 ;
   ∘ réalloue un nouveau bloc 2 pour la communication afin de compenser celui perdu pour le canal de communication, ce qui est illustré par « Mem1-Bloc2 » sur la figure 11 :
      ▪ si cette réallocation échoue, un signal d'exception est remonté au gestionnaire de tâches pour signaler que la communication est en faute.
   ∘ affecte le bloc aux tâches consommatrices T2 à T6, en vérifiant que le quota mémoire pour cette donnée n'est pas dépassé pour chaque tâche. Si ce quota mémoire est dépassé, un signal est envoyé au gestionnaire de tâches pour inhiber le canal de transmission réseau. Sinon, le gestionnaire mémoire peut, au choix de l'implémentation :
      ▪ avertir systématiquement le gestionnaire de tâches et mettre à jour les tables de traduction locales des tâches T2 à T6 ;
      ▪ attendre d'avoir remis à jour la table de traduction d'adresse avec toutes les adresses demandées par une tâche avant de signaler au gestionnaire de tâches que la tâche correspondante peut être redémarrée. Cette implémentation est la plus performante, elle sera préférée dans la mesure du possible.
   ∘ le gestionnaire de mémoire reçoit également les signaux de production de données de la part de T2 pour la tâche T7, et les signaux de fin d'utilisation des blocs de données chargées par T1. Ainsi, lorsque les tâches T2 à T6 ont toutes envoyé un signal de fin d'utilisation pour un bloc donné, la comparaison des labels des tâches ayant envoyé ce signal avec le contenu de la liste des labels des tâches utilisant ces données permet au gestionnaire de mémoire de libérer les portions de l'espace mémoire locale du groupement correspondant, pour réutilisation par d'autres données ;
   ∘ de même que pour les tâches T2 à T6 avec les données produites par T1, la tâche T7 peut être activée au fur et a mesure de la production des extrema du bloc transformé.
- au fur et à mesure de la production de l'image destination, la tâche T8 transfère les données en DRAM au travers du NoC, et libère les blocs de résultats locaux qui peuvent donc être réutilisés ;
- de manière optionnelle, les données surnuméraires chargées en phase de « prefetch » selon l'expression anglo-saxonne, qui est un mécanisme de chargement anticipé des données, peuvent être transmises au groupement suivant qui peut ainsi éviter d'avoir à passer par la DRAM pour obtenir une partie des données dont il a besoin.

Les mécanismes d'exécution d'une application de morphing fortement dirigée par les données sur une architecture massivement parallèle selon l'invention ont été décrits. Utiliser convenablement le parallélisme potentiel dans un tel contexte est très délicat mais réalisable grâce à un mécanisme de « prefetch » à la fois agressif et efficace. Les cadres d'erreur de prédiction du « prefetch » sont également pris en compte par une procédure exceptionnelle mais simple à mettre en oeuvre. L'accès aux données est un point fondamental des architectures parallèles, qui est particulièrement développé dans le modèle d'exécution sur l'architecture selon l'invention.

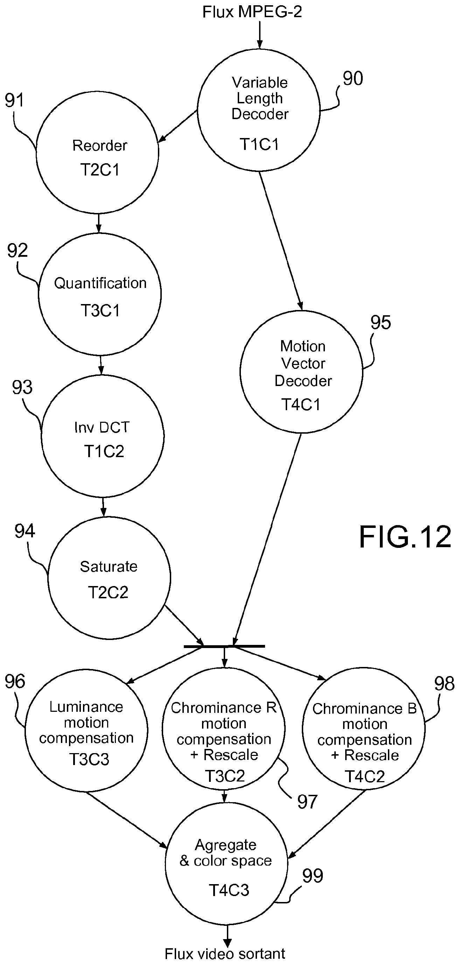

Les figures 12, 13 et 14 illustrent un exemple d'exécution d'une application de décodage MPEG-2. Aujourd'hui, le décodage MPEG-2 n'est plus une application considérée comme difficile. Elle ne demande pas des processeurs spécialisés, mais reste une application délicate dans un cadre monoprocesseur lorsqu'il s'agit d'images « Full HD » selon l'expression anglo-saxonne. C'est surtout une application remarquable car typique des traitements séquentiels en flot de données. Par ailleurs, elle sera probablement incontournable dans le futur, les applications qui transmettent des flux vidéo se multipliant. Le décodage MPEG-2 est donc une application industrielle démonstrative d'un domaine important pour l'avenir des systèmes embarqués.

Dans un diagramme de tâches, la figure 12 illustre un éclatement en tâches typiques du décodage MPEG-2. Ce diagramme illustre bien un modèle avec un aspect fort de flot de données, permettant d'analyser la mise en oeuvre de l'architecture selon l'invention pour ce type de traitements. Il illustre une tâche 90 de décodage à longueur variable, une tâche 91 de remise en forme des données de macroblocs, une tâche 92 de quantification, une tâche 93 de transformation en cosinus discret inverse, une tâche 94 de saturation, une tâche 95 de décodage de vecteur mouvement, une tâche 96 de compensation de mouvement luminance, une tâche 97 de compensation de mouvement pour la chrominance rouge, une tâche 98 de compensation de mouvement pour la chrominance bleue et une tâche 99 d'agglomération et de transformation d'espace de couleur. Dans le présent exemple, l'hypothèse est faite que les groupements comportent quatre PE et que les tâches sont allouées statiquement aux PE. Cette hypothèse est proche de ce qui est réalisé sur les systèmes de décodage ou d'encodage dédiés de l'état de l'art. Ce n'est pas une implémentation intelligente sur la plate-forme proposée. Des tâches de base, incluant les tâches de la figure 12 et des tâches DMA de transfert de données entre les groupements 1, 2 et 3, sont réparties de la manière suivante :
- Cluster 1 :
   ∘ une tâche TDMAI1C1 : import DMA du flux MPEG-2 dans le groupement 1 ;
   ∘ une tâche T1C1 : décodeur à longueur variable ;
   ∘ une tâche T2C1 : remise en forme des données de macroblocs ;
   ∘ une tâche T3C1 : quantification ;
   ∘ une tâche T4C1 : décodeur de vecteur mouvement ;
   ∘ une tâche TDMAO1C1 : export DMA des vecteurs mouvements chrominance ;
   ∘ une tâche TDMAO2C1 : export DMA des vecteurs mouvements luminance ;
   ∘ une tâche TDMAO3C1 : export DMA des macroblocs quantifiés.
- Cluster 2 :
   ∘ une tâche TDMAI1C2: import DMA des vecteurs mouvements chrominance ;
   ∘ une tâche TDMAI2C2 : import DMA des macroblocs quantifiés ;
   ∘ une tâche TDMAI3C2 : import DMA des macroblocs chrominance de référence ;
   ∘ une tâche T1C2 : transformée en cosinus discret inverse ;
   ∘ une tâche T2C2 : saturation ;
   ∘ une tâche T3C2: compensation de mouvement, chrominance rouge ;
   ∘ une tâche T4C2: compensation de mouvement, chrominance bleue ;
   ∘ une tâche TDMAO1C2 : export DMA chrominance rouge ;
   ∘ une tâche TDMAO2C2 : export DMA chrominance bleue.
- Cluster 3 :
   ∘ une tâche TDMAI1C3 : import DMA du macrobloc chrominance rouge ;
   ∘ une tâche TDMAI2C3 : import DMA du macrobloc chrominance bleue ;
   ∘ une tâche TDMAI3C3 : import DMA des vecteurs mouvements luminance ;
   ∘ une tâche TDMAI4C3 : import DMA du macrobloc luminance de référence ;
   ∘ une tâche T1C3 : sur-échantillonnage rouge ;
   ∘ une tâche T2C3 : sur-échantillonnage bleu ;
   ∘ une tâche T3C3 : compensation de mouvement luminance ;
   ∘ une tâche T4C3 : agglomération et transformation d'espace de couleur ;
   ∘ une tâche TDMAO1C3 : export DMA du flux vidéo décodé.

Il faut noter que le cadre de communication inter-groupement fait toujours intervenir deux tâches : une tâche pour l'exportation de données et une tâche pour l'importation de données, par exemple TDMAO2C1 dans le groupement 1 et TDMAI1C3 dans le groupement 3. Un canal de communication entre deux groupements est donc défini par un espace mémoire source, une tâche d'export DMA, un lien de communication, une tâche d'import DMA et un espace mémoire destination. Si un de ces cinq éléments est absent, cela signifie qu'il n'y a pas de lien de communication entre les deux groupements en question. Il est donc de la responsabilité des outils de placement/routage de s'assurer que le dimensionnement des mémoires et du réseau est correct. En cas d'erreur de communication due à l'absence d'un de ces éléments, l'erreur est détectée et une exception est générée. Le présent document ne fournit pas d'éléments supplémentaires concernant les mécanismes de gestion de cette exception. Une telle erreur donne en effet lieu à des traitements différents selon le domaine d'application du système. Avec ces hypothèses, il faut trois groupements pour décoder un flux vidéo. Sur chaque groupement, il y a donc quatre tâches pour les PE, soit une par PE. Cet agencement est classique pour les traitements de flux où, dans la mesure du possible, les traitements sont placés statiquement et où la charge s'équilibre par le jeu de la production/consommation le long du « pipeline » virtuel selon l'expression anglo-saxonne, le « pipeline » virtuel représentant le traitement du flux. Comme explicité par la suite, ce type de régulation est parfaitement possible dans le schéma de fonctionnement de l'architecture selon l'invention. Cela n'empêche pas, par ailleurs, de penser à d'autres morceaux d'applications qui fonctionneraient en parallèle sur ces groupements et sur d'autres, ou même de penser à plusieurs décodeurs sur plusieurs triplets de groupements si la puissance des PE sur les groupements s'avère insuffisante pour de grosses images. Il faut quand même une tâche pour s'assurer de l'ordre des traitements en entrée et en sortie.

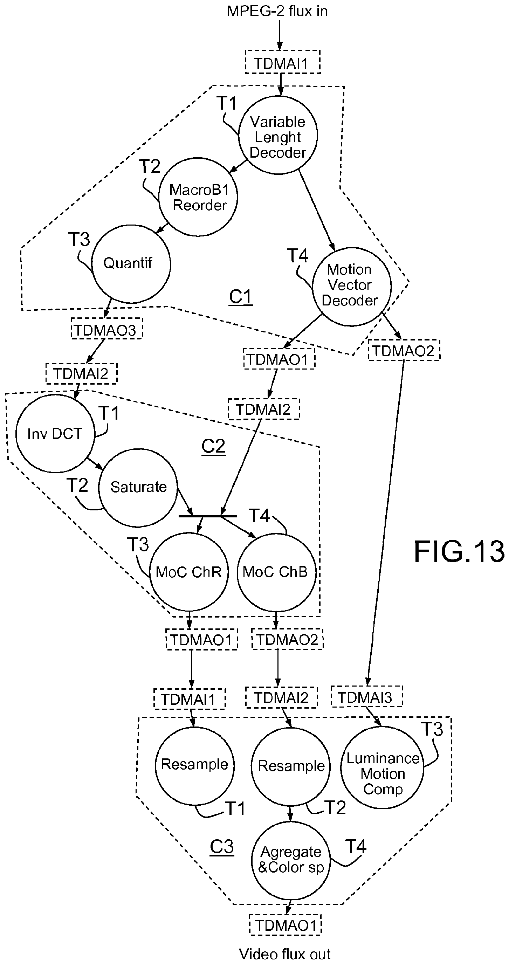

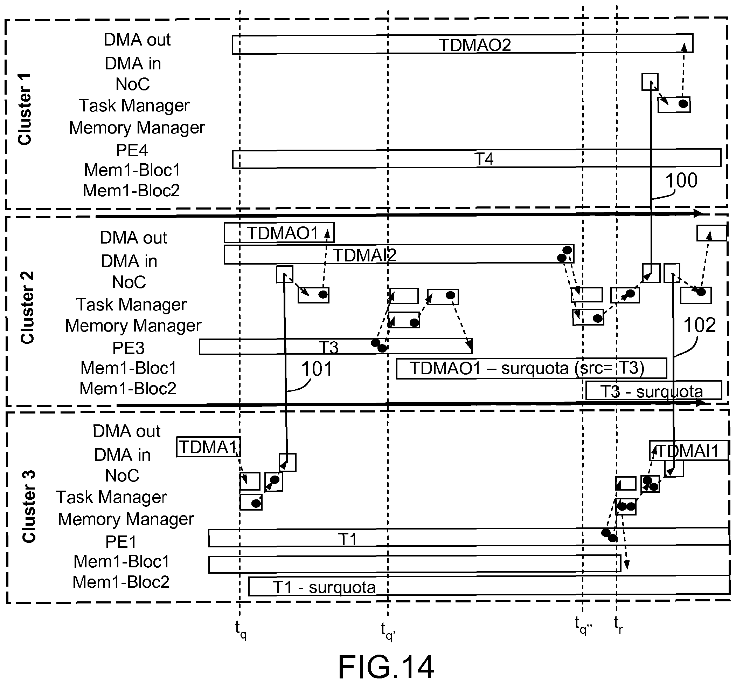

L'exécution le long du « pipeline » logiciel défini par l'agencement des tâches illustré par la figure 13 dans un diagramme peut être synthétisée de la manière suivante :
- TDMAI1C1 charge le flux au fur et à mesure de son arrivée dans la mémoire locale du groupement ;
- T1C1 a un quota lié au nombre de paquets d'avance, ce qui permet d'arrêter les transferts dès que le nombre de trames d'avance est suffisant, probablement entre 3 et 5 trames selon les latences de communication. Si le moyen de gestion permet une allocation par blocs de taille variables, il sera possible de dimensionner finement le quota. Si ce n'est pas le cas il faudra que le quota soit un multiple du bloc de taille fixe ;
- de même, T2C1 et T4C1 ont des quotas sur les nombres de macroblocs et de vecteurs non décodés avant de saturer. Si ce palier est atteint, le gestionnaire de tâches bloque la tâche productrice, c'est à dire T1C1. Si la situation ne se débloque pas, la tâche T1C1 déjà bloquée ne consomme plus non plus les données d'entrées fournies par TDMA1C1, ce qui aboutit au blocage de la communication. Du moment que les quotas sont correctement évalués, les mécanismes décrits précédemment pour les contrôles de quotas permettent de faire une régulation de flux de données de façon implicite, sans faire peser de charge sur la mise en oeuvre des traitements. S'ils ne sont pas correctement dimensionnés, les surcharges de quotas provoquent des erreurs explicites d'allocation mémoire ou de communication. Les sous-charges des baisses de performance se mettent alors en évidence aisément. Il est considéré comme acquis que le système effectue de lui-même son propre équilibrage de charge en fonctionnement nominal, par la simple mise en place des quotas lors de la compilation ;
- cela étant acquis, le déroulement de l'application en lui-même ne pose pas de problèmes. Tant que les données d'une tâche ne sont pas prêtes, la tâche est mise en attente ou commutée si le système contient d'autres applications et que la politique d'ordonnancement le permet. Dès qu'elle dispose de ses données, elle peut effectuer des traitements et produire des données de sortie, à moins que la ou les tâches consommatrices soient trop lentes à les traiter. Si c'est le cas, la tâche productrice est suspendue par le gestionnaire de tâches, à cause du viol de quota mémoire d'une tâche consommatrice, comme expliqué pour l'application de morphing ;
- il apparaît que le passage des données entre les groupements se fait par une mise en regard des tâches DMA qui définissent un canal de communication, pour peu qu'il existe de la mémoire à l'arrivée. Ce canal est lié à un routage des communications entre traitements, issu du placement/routage des traitements de l'application sur la puce. La communication fait donc intervenir les données sources stockées dans la mémoire locale du groupement d'origine. La communication fait aussi intervenir la tâche DMA d'émission. La communication fait également intervenir le canal du NoC où la bande passante a été réservée pour ladite communication par l'intermédiaire du routage. La communication fait enfin intervenir la tâche DMA de réception et sa mémoire associée sur le groupement destination, réservée dynamiquement par le gestionnaire de mémoire. La réunion de ces quatre éléments permet d'établir une communication en temps et latence bornée statiquement, et donc déterministe. Cette propriété est importante pour de nombreux cas d'applications, même si ce n'est pas le cas du décodage MPEG-2 ;
- la capacité de bloquer le producteur de données en sur-quota pour un consommateur donné permet de bloquer sélectivement et pas plus que nécessaire la chaîne de dépendance des tâches, y compris lorsqu'il y a transfert de données au travers du NoC au milieu de cette chaîne. La reprise est également automatique, le tout repose sur une maîtrise des quotas mémoire par la chaîne de compilation. Des mécanismes d'exception sont mis en oeuvre pour détecter les problèmes lorsque ce dimensionnement est en défaut, comme illustré par un exemple dans le chronogramme de la figure 14 :
   ∘ il est supposé que le sur-échantillonnage de la chrominance rouge par T1C3 est en sur-quota à un instant t_{q}. C'est une opération assez longue et par ailleurs, ce groupement est chargé avec des opérations qui peuvent exiger une quantité de mémoire importante, notamment en fin de chaîne du traitement vidéo. On peut faire en sorte que le gestionnaire de mémoire informe le gestionnaire de tâches, qui bloque la tâche TDMAI1 C3 de transfert DMA. Comme il s'agit d'une opération de transfert DMA, un message est envoyé au gestionnaire de tâches du groupement 2 pour signaler l'anomalie. Les communications NoC correspondantes sont illustrées sur la figure 14, il s'agit de communications 100, 101 et 102 ;
   ∘ le gestionnaire de tâches du groupement 2 bloque la tâche TDMAO1C2 d'émission DMA ;
   ∘ si le blocage se poursuit, la tâche TDMAO1C2 passe en sur-quota à un instant t_{q}'. Si c'est le cas, le gestionnaire de mémoire informe le gestionnaire de tâches, qui bloque la tâche productrice T3C2. A ce niveau, seule la chaîne locale de traitement de la chrominance rouge est impactée, le reste continue à fonctionner nominalement.
   ∘ si il est supposé que le blocage n'est toujours pas résorbé, T3C2 peut également passer en sur-quota à un instant t_{q}", ce qui peut se faire par deux scénarios non exclusifs :
      ▪ sur-quota sur vecteur mouvement : le gestionnaire de mémoire indique l'origine du sur-quota au gestionnaire de tâches, qui bloque la tâche TDMAI2C2 d'entrée DMA. Un message est transmit au gestionnaire de tâches du groupement 1 pour bloquer TDMAO1C1, ce qui peut ensuite provoquer le blocage de T4C1 ;
      ▪ sur-quota sur les blocs décodés pour la chrominance rouge : le gestionnaire de mémoire informe le gestionnaire de tâches de l'apparition du sur-quota, qui bloque la tâche productrice T2C2 ;
      Le mécanisme est donc prévu pour bloquer la chaîne de dépendance minimale, chaîne construite sur l'arbre de dépendance déduit du graphe de dépendance inverse dont les cycles sont retirés.
   ∘ dès que la tâche T1C3 n'est plus en sur-quota à un instant tᵣ, le gestionnaire de mémoire informe le gestionnaire de tâches qui débloque la tâche TDMAI1C3. Le gestionnaire de tâches envoie un message au gestionnaire de tâches du groupement 2, qui débloque TDMAO2C2. Au fur et à mesure des disparitions des sur-quotas, le gestionnaire de mémoire locale informe le gestionnaire de tâches, qui débloque les tâches dans les mêmes conditions que le blocage avait eu lieu. L'équilibre du « pipeline » est donc une propriété émergeante naturelle, avec des règles simples et avec la seule hypothèse du dimensionnement correct des quotas mémoire.
   ∘ si les quotas sont mal dimensionnés, le gestionnaire de mémoire peut le détecter simplement : l'allocation dynamique prévue pour chaque donnée en entrée a lieu nominalement jusqu'à ce que la situation fautive se produise. A ce moment, le gestionnaire de mémoire tente d'allouer de la mémoire pour une demande qui a été faite, mais est dans l'incapacité de la satisfaire car trop de mémoire a été alloué par ailleurs. Le gestionnaire de mémoire doit donc faire remonter l'exception au gestionnaire de tâches. Le traitement de ce type d'exception est fortement dépendant du domaine d'application et donc n'est pas spécifié dans la présente demande. Il peut être utilisé, par exemple, pour détecter des anomalies dans les programmes, y compris dans les programmes de dimensionnement. Mais il peut également être utilisé pour faire un réglage automatique en ligne de certains quotas mémoire pour des applications non critiques.
- Le reste de l'exécution de l'application ne pose pas de problème particulier et devrait être simple à déduire à partir de ce qui a déjà été décrit dans les deux exemples d'application.

Il apparaît clairement que le modèle d'exécution de l'architecture selon l'invention est également bien adapté aux applications de type traitements de flux. Dans ce cadre précis, elle dispose de mécanismes simples d'équilibrage dynamique des flots de données, qui sont naturels pour les spécialistes de ce type de traitement. Ceci prouve la très bonne flexibilité de l'architecture selon l'invention et de son modèle d'exécution, puisqu'il sait aussi bien gérer ce type d'exécution qu'un modèle de tâche beaucoup plus dynamique, comme cela a été vu dans le cadre du morphing. Ce qu'il est important de comprendre dans cette mise en oeuvre est que l'architecture proposée avec son modèle d'exécution est capable d'exécuter de façon efficace, c'est à dire avec une exploitation optimale du parallélisme, les deux types de modèles imbriqués au sein de la même application. C'est notamment ce qui fait son originalité. Il est important de noter que le support du mode flot de données est fait non seulement à l'intérieur du groupement, mais aussi entre les groupements. La description des mécanismes gérant l'absence de données ou la saturation des mémoires laisse présager une forte pression sur le gestionnaire de tâches et de mémoire. Toutefois la gestion particulière de ces modes peut être vue de manière hiérarchique. Ainsi, une partie de ces fonctionnalités, comme la mise en attente de données ou l'attente d'espace mémoire disponible, peut être déportée au niveau des PE. Le gestionnaire de tâches est alors découpé en deux types de gestionnaires. Un premier type se retrouve associé à chaque PE et assure le support du mode flot de données. Le second qui est chargé de l'allocation des tâches et de leurs interruptions éventuelles est appelé gestionnaire de tâches central. Le gestionnaire de tâches central a alors la responsabilité de décider d'interrompre ou non des tâches en attente. Toutefois, il est possible de choisir la politique gérant le recours au gestionnaire de tâches central. Ainsi, il est possible de réaliser des traitements réellement en flot de données, pour lesquels le gestionnaire central n'intervient pas.

Un autre exemple d'exécution peut être donné, celui d'une application de traitement d'image par transformée de Hough, au flot de contrôle très dynamique exploitant massivement le parallélisme. La transformée de Hough à pour but de trouver dans une image des contours de formes géométriques simples comme des segments de droites, des cercles ou ellipses. Cette application classique dans le domaine du traitement d'image est difficilement parallélisable. Cette difficulté tient au fait que l'espace des résultats est nécessairement partagé entre les PE. De plus, cette application est gourmande en espace mémoire. Pour réaliser la transformée de Hough, l'image des contours est parcourue dans sa totalité, sans ordre préférentiel sur le parcours. Pour chaque point de contour, il faut calculer l'ensemble des droites pouvant passer par ce point. Chaque droite est paramétrée par deux valeurs a et b, selon la formulation y=ax+b. Un espace des paramètres est ainsi défini où chaque point représente un couple (a,b). L'ensemble des droites qui peuvent passer par un point de contour de l'image est donc représenté par une droite dans l'espace des paramètres. L'accumulation de ces droites dans l'espace des paramètres identifie des points de convergence. Chacun de ces points indique la présence d'une ligne dans l'image de départ. Ces points permettent de connaître la position de ces droites en récupérant les paramètres qui y sont associés. La parallélisation de cet algorithme est problématique, puisque chaque pixel de l'image de contour est associé à une droite dans l'espace des paramètres. S'il est facile de distribuer l'image d'entrée, l'espace des résultats est par essence partagé. Il est bien sûr possible de faire travailler chaque PE sur une sous-partie de l'image et de produire un espace des paramètres pour chacune de ces sous-images. Une tâche supplémentaire doit alors cumuler l'ensemble de ces espaces pour n'en former plus qu'un. Cette solution pose alors le problème de la quantité de mémoire nécessaire, puisque pour faire une parallélisation sur N PE, il est nécessaire de stocker au minimum N+1 images. Un tel choix n'est cependant pas en accord avec le contexte des systèmes embarqués où une efficacité silicium élevée est recherchée. Pour conclure, cet algorithme peut être implémenté sur une architecture à mémoire partagée, mais cette parallélisation conduit à beaucoup de conflits mémoire et doit donc être limitée à un parallélisme assez faible. Sur une architecture à mémoire distribuée, l'espace mémoire doit être surdimensionné. Le problème dans sa généralité exige que soit considéré le cadre où les capacités mémoires des groupements sont bien en deçà de ce que demande l'application. Ce cadre est en accord avec l'état de l'art des techniques d'intégration et des besoins de traitement vidéo. Comme explicité par la suite, il est possible de paralléliser la transformée de Hough de manière plus efficace grâce à la présente invention, en distribuant simultanément sur les différents groupements l'image de départ et l'espace des paramètres. Chaque groupement est responsable de la lecture d'une zone de l'image et de l'écriture d'une partie de l'espace des paramètres. Par exemple ce découpage peut être fait en réalisant des maillages de formes rectangulaires. L'algorithme est fonctionnellement découpé en deux parties sur chaque groupement.

Dans une première partie de l'algorithme, il s'agit de lire les pixels de la zone de l'image dont le groupement est responsable et de rechercher des points de contours. A chaque point de contour trouvé, le groupement calcule la portion de l'espace des paramètres qui va être modifiée par ce point. Dans le cas de la recherche de droite, il est connu qu'un point de l'image de départ devient une droite dans le cadre de sa transformée de Hough. Les paramètres de cette droite peuvent être utilisés pour connaître la portion à modifier dans l'espace de Hough. Le groupement doit donc trouver les groupements en charge de la zone à modifier. Une fois cette identification effectuée, une tâche DMA est activée pour envoyer vers les groupements concernés une demande de mise à jour de la zone de l'espace des paramètres avec les paramètres de la droite. Potentiellement, chaque groupement peut envoyer des données vers l'ensemble des autres groupements, mais le calcul des destinataires réels est réalisé durant le traitement.

Dans une seconde partie de l'algorithme, il s'agit de réceptionner les demandes de mises à jour, qui peuvent potentiellement provenir de tous les groupements. Pour chaque demande, le groupement doit récupérer en mémoire centrale la portion de l'espace des paramètres à mettre à jour avant d'effectuer la mise à jour puis de réécrire en mémoire centrale le nouvel espace des paramètres. Un certain nombre d'optimisations sont possibles à ce niveau, notamment il est possible de garder en mémoire locale une partie de l'espace des paramètres pouvant servir aux demandes suivantes. Cette partie de l'algorithme peut prendre deux formes selon les capacités de l'interface avec le contrôleur DRAM. Selon une première implémentation, la zone d'intérêt peut être récupérée et tous les pixels de la zone sont alors modifiés. Selon une deuxième implémentation, une zone plus grande peut être récupérée, éventuellement toute la zone dont le groupement est responsable, et les pixels peuvent alors être mis à jour selon qu'ils appartiennent ou pas à la droite de paramètres. Pour être efficace, la deuxième implémentation doit attendre l'accumulation d'un certain nombre de demandes afin de masquer la récupération d'une zone d'intérêt plus grande. Pour résumer, il est possible soit de faire une communication complexe couplée à un traitement de mise à jour simple, en récupérant une zone d'intérêt fine, soit d'avoir un traitement plus complexe avec une communication simplifiée.

Il apparaît clairement que la parallélisation de l'algorithme de Hough est fortement couplée aux capacités de communications du système. Les mécanismes déjà illustrés dans les deux applications précédentes, comme la gestion de quotas ou la synchronisation des tâches, restent valides pour la transformée de Hough. Cependant, un certain nombre d'éléments discriminants existent vis-à-vis des deux applications précédentes de morphing et de décodage MPEG-2. Premier élément discriminant, les destinataires de certaines communications sont calculés en cours de traitement. Si le destinataire d'une communication doit être calculé en cours d'exécution, le programme DMA doit pouvoir acquérir les paramètres lui permettant d'adapter son traitement. Comme il a déjà été dit précédemment, le DMA exécute un programme et la tâche DMA est gérée par les mêmes mécanismes qu'une tâche d'un PE. Ainsi la tâche DMA a une condition de précédence sur les paramètres, dans le cas présent c'est le destinataire. Une fois les paramètres connus, le programme DMA peut donc les lire en mémoire et adapter la communication. Ce mécanisme supporte aussi le mode flot de données évoqué précédemment. Ainsi, si les destinataires changent au cours de l'exécution, le programme DMA vient les lire successivement dans la mémoire. Dans le cas où ces paramètres ne sont pas encore disponibles, la tâche est mise en attente et est gérée par le contrôleur de tâches. Il faut aussi noter qu'il est possible que le consommateur ait besoin d'identifier le groupement qui lui envoie la donnée afin de pouvoir adapter le traitement de réception. Ceci peut être réalisé soit directement à l'intérieur du bloc DMA, soit en passant par le gestionnaire de ressources.

Deuxième élément discriminant, la récupération de données contenues en mémoire centrale peut être paramétrée en cours de traitement. Il s'agit en fait du même cas que celui évoqué dans l'application de « morphing » pour le « prefetch » des blocs d'images prédits. La principale différence avec un transfert programmé vers un autre groupement est que le paramètre est généralisé. De plus, l'interface avec la mémoire centrale peut prendre différentes formes avec des capacités variables. Ainsi, il est possible de proposer un « groupement d'accès à la mémoire centrale » dont le fonctionnement est fondé sur un principe similaire avec le reste du système, en particulier le fonctionnement des groupements. Il dispose aussi d'un gestionnaire et de mémoire locale. Une demande d'une zone d'intérêt en mémoire centrale peut alors commencer par l'envoi des paramètres par un groupement. La disponibilité de ces paramètres rend active une tâche DMA qui vient alors réaliser le transfert vers la mémoire centrale. Il est même possible d'aller plus loin et de doter le groupement de mémoire centrale d'une unité permettant la gestion des droits de portion de l'espace mémoire et ainsi d'avoir une vue totalement homogène au niveau du modèle d'exécution. Toutefois, si ce type d'accès par zone d'intérêt est prépondérant dans un domaine applicatif donné, il est aussi possible de spécialiser la structure afin d'inclure ce mode dans le DMA de la mémoire centrale.

Troisième élément discriminant, les groupements ignorent la quantité de données qu'ils doivent traiter, puisque les demandes de mise à jour sont dirigées par les données, liées à la présence ou non de points de contour. Si aucun mécanisme n'est prévu, la tâche peut se mettre en attente de données alors que le producteur a fini son travail et ne fournit plus de données. Il est donc nécessaire que le producteur puisse signaler au consommateur qu'il a fini la tâche afin que celui-ci ne se bloque pas dans un état d'attente. Ceci peut être réalisé de différentes manières. A titre d'exemple, l'écriture d'une donnée particulière ou l'envoi d'un événement depuis le producteur vers le consommateur peuvent être envisagés.

La transformée de Hough peut donc être efficacement parallélisée sur le modèle d'exécution selon l'invention, notamment grâce aux dispositifs de communication qui ont un support dynamique lors de l'exécution. Il est possible d'arriver à un compromis entre la complexité des traitements et des communications, de façon à bien répartir les charges de travail et à optimiser l'application.

Un avantage fondamental de la présente invention est que le modèle qu'elle propose supporte à la fois le parallélisme de tâches et le mode flot de données tout en maintenant un fort déterminisme d'exécution. L'implémentation des différentes fonctionnalités nécessaires pour supporter ce paradigme d'exécution peut prendre diverses formes, dont seules quelques pistes possibles démontrant sa faisabilité ont été décrites dans la présente demande. Notamment, la nature du réseau et des éléments de traitement ou de communication ne remettent pas en cause le modèle selon l'invention, mais le rende plus ou moins pertinent et efficace. Un autre avantage de la présente invention est que la dynamique au sein d'un groupement ou des communications permet d'implémenter efficacement des applications de calcul intensif comportant des contrôles complexes. Le recouvrement entre les traitements et les communications autorisent des politiques de « prefetch » intensives permettant de limiter les goulots d'étranglement que constitue généralement l'accès aux données.

## Revendications

1. Système pour exécuter une application en exécutant des tâches en parallèle, **caractérisé en ce que** le système comprend :
- une pluralité d'unités de traitement, les unités de traitement (40 à 43) étant organisées en une pluralité de groupements d'unités (CI0 à CI15), chaque groupement comportant une mémoire locale (44 à 59), la mémoire locale comprenant un ou plusieurs blocs mémoires;
- des moyens pour allouer statiquement un ensemble de tâches de ladite application à l'un des groupements d'unités, de sorte que ledit ensemble de tâches est traité par le même groupement d'unités d'une exécution à une autre de ladite application ;
et **en ce que** chaque groupement d'unités comporte des moyens (60) de gestion de groupement pour allouer dynamiquement chaque tâche d'un ensemble de tâches alloué audit groupement à une unité de traitement dans ledit groupement et des blocs mémoire dans la mémoire locale pour exécuter ladite tâche, de sorte qu'une tâche donnée d'une application peut être traitée par une unité de traitement différente d'une exécution à une autre de ladite application;
les moyens de gestion de groupement (62, 64, 63, 65) opérant simultanément et coopérativement,
et **en ce que**, lorsqu'une tâche allouée à un groupement d'unités doit consommer des données produites dans un autre groupement d'unités, une tâche d'émission des données est exécutée dans le groupement où sont produites les données, ladite tâche d'émission transmettant les données à une tâche de réception des données exécutée dans le groupement où sont consommées les données, un espace mémoire dédié à la communication entre la tâche d'émission et la tâche de réception étant réservé dans la mémoire locale de l'un des deux groupements impliqués.

2. Système selon la revendication 1, **caractérisé en ce que** la mémoire locale que comporte chaque groupement est dédiée audit groupement.

3. Système selon l'une des revendications précédentes, **caractérisé en ce que** les groupements d'unités de traitement (CI0 à CI15) sont disposés sur une puce (30), les groupements d'unités communiquant entre eux par l'intermédiaire d'un réseau sur puce (31).

4. Système selon l'une des revendications précédentes, **caractérisé en ce qu'**il comporte une mémoire centrale (34).

5. Système selon l'une des revendications précédentes, **caractérisé en ce qu'**il comporte des moyens de compilation et d'édition de liens pour allouer statiquement des tâches à chaque groupement d'unités.

6. Système selon l'une des revendications précédentes, **caractérisé en ce que** la tâche d'émission est interruptible temporairement afin de ne pas saturer l'espace mémoire dédié à la communication entre la tâche d'émission et la tâche de réception.

7. Système selon l'une des revendications précédentes, **caractérisé en ce que** le système est configuré pour déterminer le débit de la tâche d'émission à la compilation, et pour allouer à la tâche de réception de l'espace dans la mémoire locale en fonction dudit débit.

8. Système selon l'une des revendications précédentes, **caractérisé en ce que** la tâche d'émission de données est allouée statiquement au groupement où sont produites les données et la tâche de réception de données est allouée statiquement au groupement où sont consommées les données.

9. Système selon l'une des revendications précédentes, **caractérisé en ce que** les tâches d'émission et de réception sont exécutées par des moyens d'exécution dédiés configurés pour échanger directement des données avec la mémoire locale de chaque groupement.

10. Système selon la revendication 7, **caractérisé en ce que** le groupement où sont consommées les données envoie un crédit au groupement produisant les données en fonction de l'espace mémoire disponible, le groupement étant configuré pour produire les données en ajustant le débit d'émission des données en fonction du crédit reçu du groupement où sont consommées les données.

11. Système selon l'une des revendications précédentes, **caractérisé en ce que**, lorsque l'espace mémoire dédié à la communication entre la tâche d'émission et la tâche de réception est utilisé au-delà d'un quota donné, les moyens (60) de gestion de groupement du groupement exécutant la tâche de réception étant configuré pour envoyer un signal d'interruption aux moyens (60) de gestion de groupement du groupement exécutant la tâche d'émission, et pour envoyer un signal de reprise lorsque l'espace mémoire est utilisé en-dessous du quota.

12. Système selon l'une des revendications précédentes, **caractérisé en ce que** les blocs mémoire alloués de la mémoire locale ont une taille fixe.

13. Système selon l'une des revendications précédentes, **caractérisé en ce que** les moyens de gestion des tâches (62) comprennent :
- un module de sélection des tâches pour sélectionner des tâches allouables remplissant des prérequis d'exécution ;
- un module d'ordonnancement pour affecter chaque tâche allouable à une unité de traitement disponible desdits groupements.

14. Système selon la revendication 13, **caractérisé en ce que** le module de sélection des tâches détermine les tâches allouables remplissant les prérequis d'exécution à la fois dans un mode d'exécution de type multitâche parallèle et dans un mode d'exécution de type flot de données.

15. Système selon l'une des revendications 13 et 14, **caractérisé en ce que** les prérequis d'exécution comprennent des précédences de traitements et/ou des disponibilités de données et/ou des disponibilités d'espaces mémoires pour stocker les données produites et/ou des événements locaux ou extérieurs au groupement.

16. Système selon l'une des revendications précédentes, **caractérisé en ce que** la tâche d'émission permet de transmettre des données vers plusieurs groupements d'unités simultanément, de façon à alimenter simultanément plusieurs tâches consommatrices avec les mêmes données.

17. Système selon l'une des revendications précédentes, **caractérisé en ce que** plusieurs tâches d'émission sont exécutables simultanément dans un même groupement d'unités, de façon à alimenter simultanément plusieurs tâches consommatrices avec des données différentes.

18. Système selon l'une des revendications précédentes, **caractérisé en ce qu'**il comporte des moyens dédiés à la gestion de tâches d'émission et de réception de type DMA, afin de ne pas surcharger les moyens de gestion des tâches.

19. Système selon l'une des revendications précédentes, **caractérisé en ce qu'**il comporte au moins une interface d'entrées/sorties (35, 36).

20. Système selon l'une des revendications précédentes, **caractérisé en ce qu'**il permet d'exécuter une application de morphage en exécutant des tâches en parallèle sur ses unités de traitement.

21. Système selon l'une des revendications précédentes, **caractérisé en ce qu'**il permet d'exécuter une application implémentant une transformée de Hough en exécutant des tâches en parallèle sur ses unités de traitement.

22. Système selon l'une des revendications précédentes, **caractérisé en ce qu'**il permet d'exécuter une application de décodage MPEG en exécutant des tâches en mode pipeline.

23. Système selon l'une des revendications précédentes, **caractérisé en ce que** les blocs mémoires de la mémoire locale sont libérés par utilisation d'un compteur du nombre de tâches ayant consommé les données de ces espaces.

24. Système selon l'une des revendications précédentes, **caractérisé en ce que** les blocs mémoire de la mémoire locale sont libérés par utilisation d'une liste des tâches ayant consommé les données de ces espaces.

25. Système selon l'une des revendications précédentes, **caractérisé en ce que** les moyens de gestion de groupement comprennent :
- des moyens de gestion de tâches configurés pour gérer l'exécution des tâches sur les unités de traitement du groupement, et
- des moyens de gestion de mémoire configurés pour gérer l'allocation des données comprises dans un ou plusieurs blocs mémoires de la mémoire locale à l'ensemble de tâches allouées au groupement.

## Patentansprüche

1. System zum Ausführen einer Anwendung durch paralleles Ausführen von Aufgaben, **dadurch gekennzeichnet, dass** das System Folgendes beinhaltet:
- eine Vielzahl von Verarbeitungseinheiten, wobei die Verarbeitungseinheiten (40 bis 43) in einer Vielzahl von Einheitengruppen (CI0 bis CI15) organisiert sind, wobei jede Gruppe einen lokalen Speicher (44 bis 59) beinhaltet, wobei der lokale Speicher einen oder mehrere Speicherblöcke beinhaltet;
- Mittel zum statischen Zuweisen einer Gruppe von Aufgaben der Anwendung an einen der Einheitenverbände in der Weise, dass die Gruppe von Aufgaben von einer Ausführung zu einer anderen von derselben Einheitengruppe verarbeitet wird;
und dadurch, dass jede Einheitengruppe Mittel (60) zur Verwaltung der Gruppe beinhaltet, um dynamisch jede Aufgabe eines Satzes von Aufgaben, welcher der Gruppe zugewiesen ist, einer Verarbeitungseinheit in der Gruppe zuzuweisen, und Speicherblöcke in dem lokalen Speicher, um die Aufgabe in der Weise auszuführen, dass eine gegebene Aufgabe einer Anwendung von einer anderen Verarbeitungseinheit von einer Ausführung zu einer anderen verarbeitet werden kann;
wobei die Mittel zum Verwalten von Gruppen (62, 64, 63, 65) gleichzeitig und kooperativ arbeiten,
und dadurch, dass, wenn eine Aufgabe, die einer Einheitengruppe zugewiesen wurde, in einer anderen Einheitengruppe erzeugte Daten verbrauchen soll, eine Datensendeaufgabe in derjenigen Gruppe ausgeführt wird, in dem die Daten erzeugt werden, wobei die Datensendeaufgabe die Daten an eine Datenempfangsaufgabe überträgt, welche in derjenigen Gruppe ausgeführt wird, in der die Daten verbraucht werden, wobei ein spezifisch für die Kommunikation zwischen der Sendeaufgabe und der Empfangsaufgabe vorgesehener Speicherplatz in dem lokalen Speicher einer der beiden beteiligten Einheitengruppen reserviert ist.

2. System nach Anspruch 1, **dadurch gekennzeichnet, dass** der lokale Speicher, den eine jede Gruppe beinhaltet, dieser Gruppe dediziert ist.

3. System nach einem der vorhergehenden Ansprüche, **dadurch gekennzeichnet, dass** die Verarbeitungseinheiten-Gruppen (CIO bis CI15) auf einem Chip (30) angeordnet sind, wobei die Einheitengruppen untereinander über ein chipgestütztes Netzwerk (31) kommunizieren.

4. System nach einem der vorhergehenden Ansprüche, **dadurch gekennzeichnet, dass** es einen zentralen Speicher (34) beinhaltet.

5. System nach einem der vorhergehenden Ansprüche, **dadurch gekennzeichnet, dass** es Mittel zum Kompilieren und Editieren von Links beinhaltet, um Aufgaben statisch einer jeden Einheitengruppe zuzuweisen.

6. System nach einem der vorhergehenden Ansprüche, **dadurch gekennzeichnet, dass** die Sendeaufgabe zeitweilig unterbrechbar ist, um den Speicherplatz nicht zu überlasten, der der Kommunikation zwischen der Sendeaufgabe und der Empfangsaufgabe dediziert ist.

7. System nach einem der vorhergehenden Ansprüche, **dadurch gekennzeichnet, dass** das System konfiguriert ist, um den Datendurchsatz der Sendeaufgabe beim Kompilieren zu bestimmen, und um der Empfangsaufgabe Platz im lokalen Speicher nach Maßgabe des Datendurchsatzes zuzuweisen.

8. System nach einem der vorhergehenden Ansprüche, **dadurch gekennzeichnet, dass** die Datensendeaufgabe statisch derjenigen Gruppe zugewiesen ist, in welcher die Daten erzeugt werden, und die Datenempfangsaufgabe statisch derjenigen Gruppe zugewiesen ist, in welcher die Daten verbraucht werden.

9. System nach einem der vorhergehenden Ansprüche, **dadurch gekennzeichnet, dass** die Sende- und Empfangsaufgaben durch dedizierte Ausführungsmittel ausgeführt werden, welche konfiguriert sind, um Daten direkt mit dem lokalen Speicher einer jeden Gruppe auszutauschen.

10. System nach Anspruch 7, **dadurch gekennzeichnet, dass** die Gruppe, in welcher die Daten verbraucht werden, der die Daten erzeugenden Gruppe ein Guthaben nach Maßgabe des verfügbaren Speicherplatzes sendet, wobei die Gruppe konfiguriert ist, um die Daten zu erzeugen, indem sie den Datensendedurchsatz nach Maßgabe des von derjenigen gruppe, in welcher die Daten verbraucht werden, erhaltenen Guthabens anpasst.

11. System nach einem der vorhergehenden Ansprüche, **dadurch gekennzeichnet, dass**, wenn der der Kommunikation zwischen der Sendeaufgabe und der Empfangsaufgabe dedizierte Speicherplatz über eine gegebene Quote hinaus ausgenutzt wird, die Mittel (60) zum Verwalten von Gruppen derjenigen Gruppe, welche die Empfangsaufgabe ausführt, konfiguriert sind, um ein Unterbrechungssignal an die Mittel (60) zum Verwalten von Gruppen derjenigen Gruppe zu senden, welche die Sendeaufgabe ausführt, und um ein Wiederaufnahmesignal zu senden, wenn der Speicherplatz unterhalb der Quote ausgenutzt wird.

12. System nach einem der vorhergehenden Ansprüche, **dadurch gekennzeichnet, dass** die zugewiesenen Speicherblöcke des lokalen Speichers eine feste Größe haben.

13. System nach einem der vorhergehenden Ansprüche, **dadurch gekennzeichnet, dass** die Mittel zum Verwalten der Aufgaben (62) Folgendes beinhalten:
- ein Auswahlmodul der Aufgaben zum Auswählen von zuweisbaren Aufgaben, welche die Ausführungsvoraussetzungen erfüllen;
- ein Scheduling Modul, um jede zuweisbare Aufgabe einer verfügbaren Verarbeitungseinheit der Gruppen zuzuweisen.

14. System nach Anspruch 13, **dadurch gekennzeichnet, dass** das Auswahlmodul der Aufgaben die zuweisbaren Aufgaben bestimmt, welche die Ausführungsvoraussetzungen sowohl in einem Ausführungsmodus vom Typ Parallel-Multitasiking als auch in einem Ausführungsmodus vom Typ Datenstrom erfüllen.

15. System nach einem der Ansprüche 13 und 14, **dadurch gekennzeichnet, dass** die Ausführungsvoraussetzungen Verarbeitungs-Vorrangigkeiten und/oder Datenverfügbarkeiten und/oder Speicherplatzverfügbarkeiten beinhalten, um die erzeugten Daten und/oder Ereignisse, die lokal oder außerhalb der Gruppe sind, zu speichern.

16. System nach einem der vorhergehenden Ansprüche, **dadurch gekennzeichnet, dass** die Sendeaufgabe es ermöglicht, Daten an mehrere Einheitengruppen gleichzeitig zu übertragen, um so gleichzeitig mehrere Verbraucheraufgaben mit denselben Daten zu versorgen.

17. System nach einem der vorhergehenden Ansprüche, **dadurch gekennzeichnet, dass** mehrere Sendeaufgaben gleichzeitig in einer gleichen Einheitengruppe ausgeführt werden können, um so gleichzeitig mehrere Verbraucheraufgaben mit unterschiedlichen Daten zu versorgen.

18. System nach einem der vorhergehenden Ansprüche, **dadurch gekennzeichnet, dass** es Mittel beinhaltet, welche der Verwaltung von Sende- und Empfangsaufgaben vom Typ DMA dediziert sind, um die Aufgabenverwaltungsmittel nicht zu überlasten.

19. System nach einem der vorhergehenden Ansprüche, **dadurch gekennzeichnet, dass** es mindestens eine Eingangs-/Ausgangsschnittstelle (35, 36) beinhaltet.

20. System nach einem der vorhergehenden Ansprüche, **dadurch gekennzeichnet, dass** es die Ausführung einer Morphing-Anwendung durch parallele Ausführung von Aufgaben in seinen Verarbeitungseinheiten ermöglicht.

21. System nach einem der vorhergehenden Ansprüche, **dadurch gekennzeichnet, dass** es die Ausführung einer Anwendung, welche eine Hough-Transformation implementiert, durch parallele Ausführung von Aufgaben in seinen Verarbeitungseinheiten ermöglicht.

22. System nach einem der vorhergehenden Ansprüche, **dadurch gekennzeichnet, dass** es die Ausführung einer MPEG-Decodieranwendung durch Ausführung von Aufgaben im Pipeline-Modus ermöglicht.

23. System nach einem der vorhergehenden Ansprüche, **dadurch gekennzeichnet, dass** die Speicherblöcke des lokalen Speichers durch Verwendung eines Zählers der Anzahl an Aufgaben freigegeben werden, welche die Daten dieser Speicherplätze verbraucht haben.

24. System nach einem der vorhergehenden Ansprüche, **dadurch gekennzeichnet, dass** die Speicherblöcke des lokalen Speichers durch Verwendung einer Liste der Aufgaben freigegeben werden, welche die Daten dieser Speicherplätze verbraucht haben.

25. System nach einem der vorhergehenden Ansprüche, **dadurch gekennzeichnet, dass** die Mittel zum Verwalten der Gruppen Folgendes beinhalten:
- Mittel zur Aufgabenverwaltung, welche konfiguriert sind, um die Ausführung der Aufgaben in den Verarbeitungseinheiten der gruppe zu verwalten, und
- Mittel zur Speicherverwaltung, welche konfiguriert sind, um die Zuweisung der in einem Speicherblock oder in mehreren Speicherblöcken des lokalen Speichers enthaltenen Daten an den Satz der der Gruppe zugewiesenen Aufgaben zu verwalten.

## Claims

1. A system for executing an application by executing tasks in parallel, **characterized in that** the system comprises:
- a plurality of processing units, the processing units (40 to 43) being organized into a plurality of clusters of units (CI0 to CI15), each cluster comprising a local memory (44 to 59), the local memory comprising one or more memory blocks;
- means for statically allocating a set of tasks of said application to one of the clusters of units, so that said set of tasks is processed by the same cluster of units from one execution to another execution of said application;
and **in that** each cluster of units comprises cluster managing means (60) for dynamically allocating each task of a set of tasks allocated to said cluster to a processing unit in said cluster and memory blocks in the local memory for executing said task, so that a given task from an application may be processed by a different processing unit from one execution to another execution of said application,
said cluster managing means (62, 64, 63, 65) operating simultaneously and cooperatively;
and **in that**, when a task allocated to a cluster of units has to consume data produced in another cluster of units, a data sending task is executed in the cluster where the data are produced, said data sending task transmitting the data to a data receiving task executed in the cluster where the data are consumed, and a memory space dedicated to communication between the data sending task and the data receiving task is reserved in the local memory of one of the two clusters involved.

2. The system as claimed in claim 1, **characterized in that** the local memory that each cluster comprises is dedicated to said cluster.

3. The system as claimed in any of the preceding claims, **characterized in that** the clusters of processing units (CI0 to CI15) are disposed on a chip (30), the clusters of units communicating with one another by way of a network on chip (31).

4. The system as claimed in any of the preceding claims, **characterized in that** it comprises a central memory (34).

5. The system as claimed in any of the preceding claims, **characterized in that** it comprises means for compiling and editing links for statically allocating tasks to each cluster of units.

6. The system as claimed in any of the preceding claims, **characterized in that** the data sending task is temporarily interruptible so as not to saturate the memory space dedicated to the communication between the sending task and the receiving task.

7. The system as claimed in any of the preceding claims, **characterized in that** the system is configured to determine throughput of the sending task during compilation and to allocate to the receiving task space in the local memory as a function of said throughput.

8. The system as claimed in any of the preceding claims, **characterized in that** the data sending task is allocated statically to the cluster where the data is produced and the data receiving task is allocated statically to the cluster where the data is consumed.

9. The system as claimed in any of the preceding claims, **characterized in that** the sending task and the receiving task are executed by dedicated execution means configured to exchange data directly with the local memory of each cluster.

10. The system as claimed in claim 7, **characterized in that** the cluster where the data is consumed sends a credit to the cluster producing the data as a function of an available amount of memory space, the cluster being configured to produce data by adjusting the data sending throughput as a function of the credit received from the cluster where the data is consumed.

11. The system as claimed in any of the preceding claims, **characterized in that** when the memory space dedicated to the communication between the sending task and the receiving task is used beyond a given quota, the cluster managing means (60) for the cluster executing the receiving task are configured to send an interrupt signal to the cluster managing means (60) for the cluster executing the sending task, and to send a resume signal when the memory space is used below the quota.

12. The system as claimed in any of the preceding claims, **characterized in that** the allocated memory blocks of the local memory have a fixed size.

13. The system as claimed in any of the preceding claims, **characterized in that**, the task managing means (62) comprise:
a task selecting module for selecting allocatable tasks fulfilling execution prerequisites,
a scheduling module for allocating each allocatable task to an available processing unit of said clusters.

14. The system as claimed in claim 13, **characterized in that** the task selecting module determines the allocatable tasks fulfilling execution prerequisites both in a mode of execution of parallel multitask type and in a mode of execution of data flow type.

15. The system as claimed in any one of claims 13 and 14, **characterized in that** the execution prerequisites comprise precedencies of processing operations and/or availabilities of data and/or availabilities of memory spaces for storing the data produced and/or events that are local or external to the cluster.

16. The system as claimed in any of the preceding claims, **characterized in that** the data sending task allows to transmit data to several clusters of units simultaneously, so as to simultaneously supply several consuming tasks with the same data.

17. The system as claimed in any of the preceding claims, **characterized in that** several data sending tasks are executable simultaneously in one and the same cluster of units, so as to simultaneously supply several consuming tasks with different data.

18. The system as claimed in any of the preceding claims, **characterized in that** it comprises a means for managing sending tasks and receiving tasks of DMA type, so as not to overload the task managing means.

19. The system as claimed in any of the preceding claims, **characterized in that** it comprises at least one input/output interface (35, 36).

20. The system as claimed in in any of the preceding claims, **characterized in that** it allows execution of a morphing application by executing tasks in parallel on its processing units.

21. The system as claimed in any of the preceding claims, **characterized in that** it allows execution of an application implementing a Hough transform by executing tasks in parallel on its processing units.

22. The system as claimed in any of the preceding claims, **characterized in that** it allows execution of an MPEG decoding application by executing tasks in pipeline mode.

23. The system as claimed in any of the preceding claims, **characterized in that** the memory blocks in the local memory are freed by using a counter for counting the number of tasks that have consumed data of these spaces.

24. The system as claimed in any of the preceding claims, **characterized in that** the memory blocks in the local memory are freed by using a list of tasks that have consumed data of these spaces.

25. The system as claimed in any of the preceding claims, **characterized in that** the cluster managing means comprise:
- task managing means configured to manage the execution of the tasks on the processing units of the cluster; and
- memory managing means configured to manage the allocation of data comprised in one or more memory blocks of the local memory to the set of tasks allocated to the cluster.
